# NEUE EUROPÄISCHE PATENTSCHRIFT

(11) **EP 3 466 300 B2**
(45) Veröffentlichungstag und Bekanntmachung des Hinweises auf die Entscheidung über den Einspruch: **13.08.2025**
(45) Hinweis auf die Patenterteilung: 15.12.2021
(21) Anmeldenummer: 18193192.4
(22) Anmeldetag: 07.09.2018
(51) Int. Cl.: A45F 3/14, A01G 3/06, A01D 1/14, A01D 34/90

(54) **TRAGVORRICHTUNG ZUM TRAGEN EINES HANDGEFÜHRTEN ARBEITSGERÄTES DURCH EINEN BENUTZER**
CARRYING DEVICE FOR CARRYING A HAND-HELD WORK MACHINE BY AN USER
DISPOSITIF DE TRANSPORT DESTINÉ À TRANSPORTER UN APPAREIL DE TRAVAIL PORTATIF PAR UN UTILISATEUR

(30) Priorität: 15.09.2017 DE 102017008754
(43) Veröffentlichungstag der Anmeldung: 10.04.2019
(60) Teilanmeldung: 21174483.4
(73) Patentinhaber: Andreas Stihl AG & Co. KG, 71336 Waiblingen (DE)
(72) Erfinder: Behringer, Patrick, 73760 Ostfildern (DE); Pfeifer, Markus, 71364 Winnenden (DE); Förg, Timo, 71522 Backnang (DE); Lepschy, Bastian, 71540 Murrhardt (DE); Haug, Simon, 71336 Waiblingen (DE); Nitze, Martin, 71686 Remseck (DE)
(74) Vertreter: Wasmuth, Rolf

(56) Entgegenhaltungen:
- EP-A1- 2 243 347
- EP-A1- 2 594 124
- EP-A1- 2 594 124
- EP-A1- 2 653 062
- EP-A1- 2 850 965
- EP-A1- 2 850 965
- EP-A2- 0 853 037
- EP-B1- 2 243 347
- WO-A1-2008/076009
- WO-A1-2008/076009
- WO-A1-2008/076010
- WO-A1-2008/076010
- WO-A1-2008/147256
- WO-A1-2008/147256
- WO-A1-2008/147257
- WO-A1-2012/122598
- WO-A1-94/09674
- DE-A1- 102007 048 104
- DE-A1- 102007 048 104
- US-A1- 2003 158 024
- US-A1- 2009 224 592
- US-A1- 2013 119 100
- US-A1- 2013 119 100
- US-B1- 6 247 624

## Beschreibung

Die Erfindung betrifft eine Tragvorrichtung zum Tragen von Lasten durch einen Benutzer, insbesondere zum Tragen eines handgeführten Arbeitsgerätes wie eines Freischneidegerätes oder dgl., mit mindestens einem Schultergurt zur Anlage der Tragvorrichtung auf der Schulter eines Benutzers und mit einer seitlichen Beinplatte mit einer Anschlusseinheit zum Ankoppeln eines Arbeitsgerätes, wobei die Beinplatte mit einem Traggurt an der Tragvorrichtung gehalten ist, und der Traggurt mit einem Ende mit dem Schultergurt wirkverbunden ist, und die Beinplatte längs des Traggurtes auf dem Traggurt verschiebbar ist.

Tragvorrichtungen zum Tragen von Lasten wie z. B. zum Arbeiten mit einem Freischneidegerät sind bekannt. Sie bestehen im Wesentlichen aus einer Rückenplatte mit Schultergurten und einem Hüftgurt, wobei eine Beinplatte über einen Traggurt an der Tragvorrichtung gehalten ist. Die Beinplatte weist auf ihrer dem Benutzer abgewandten Außenseite eine Anschlusseinheit zum Ankoppeln des Arbeitsgerätes auf, wobei das Gewicht des Arbeitsgerätes über die Beinplatte und den Traggurt auf die Tragvorrichtung abgeleitet wird.

Ein Freischneidegerät kann nach dem Prinzip einer Sense zum Mähen von Gras, Gestrüpp oder dgl. im Wesentlichen in der Horizontalen bewegt werden. Dabei kann sich die Lage der Beinplatte auf dem Traggurt ändern, was der Benutzer als störend empfinden kann. Müssen mit dem Arbeitsgerät vertikale Arbeitsbewegungen ausgeführt werden, wie dies z. B. beim Arbeiten in einer Hanglage oder beim Zurückschneiden von Gebüsch oder dgl. notwendig ist, kann eine Verschiebung der Beinplatte auf dem Traggurt zweckmäßig sein.

Benutzer arbeiten meist mit unterschiedlichen Arbeitstechniken. Während ein erster Benutzer zum Grasmähen seine Hüfte eindreht und nicht möchte, dass die Beinplatte sich selbsttätig nach vorn bewegt; wünscht ein anderer Benutzer eine beim Grasmähen gleitende Bewegung der Beinplatte auf dem Traggurt. Die Dokumente EP 2 653 062 A1 und EP 2 243 347 A1 beschreiben bekannte Tragvorrichtungen.

Der Erfindung liegt die Aufgabe zugrunde, eine Tragvorrichtung zum Tragen eines handgeführten Arbeitsgerätes durch einen Benutzer derart auszubilden, dass eine vom Benutzer jeweils bevorzugte Arbeitstechnik leicht ausgeführt werden kann und dennoch die Tragvorrichtung unabhängig von der Arbeitstechnik ermüdungsfrei und zweckmäßig genutzt werden kann.

Diese Aufgabe wird durch den Gegenstand des Anspruchs 1 gelöst, wobei Ausgestaltungen der Erfindung in den abhängigen Ansprüchen angegeben sind. Gemäß einer Ausgestaltung ist funktional zwischen dem Traggurt und der Beinplatte eine Fixiervorrichtung angeordnet, die eine Freigabestellung und eine Sperrstellung aufweist. In der Freigabestellung ist die Beinplatte längs des Traggurtes verschiebbar, während in der Sperrstellung die Beinplatte an dem Traggurt unverschieblich festgelegt ist. Die Sperrstellung kann einem ersten Arbeitsmodus des Arbeitsgerätes und die Freigabestellung einem zweiten Arbeitsmodus des Arbeitsgerätes zugeordnet sein.

Die funktional zwischen dem Traggurt und der Beinplatte angeordnete Fixiervorrichtung bleibt in der Freigabestellung der Fixiervorrichtung längs des Traggurtes verschiebbar, während die Beinplatte in der Sperrstellung der Fixiervorrichtung an dem Traggurt unverschieblich festgelegt ist. Unter "unverschieblich" wird verstanden, dass sich die Beinplatte durch die Arbeitsbewegungen auf dem Traggurt nicht verschiebt.

Mit dem Begriff Traggurt sind nicht nur flache Gurte umfasst, die einen im Schnitt rechteckigen Querschnitt aufweisen, sondern auch Gurte mit anderen Querschnitten, wie zum Beispiel ein Tragseil oder dergleichen Element.

Die Tragvorrichtung kann in einem ersten Arbeitsmodus in Sperrstellung der Fixiervorrichtung genutzt werden und in einem zweiten Arbeitsmodus die Fixiervorrichtung in der Freigabestellung genutzt werden. Auf diese Weise kann die Tragvorrichtung der bevorzugten Arbeitstechnik des Benutzers ebenso angepasst werden wie an den jeweiligen Anwendungsfall des handgeführten Arbeitsgerätes, insbesondere eines Freischneidegerätes oder dgl.

Zweckmäßig weist die Beinplatte einen Gurtkanal für den Traggurt auf, wobei der Traggurt in Richtung der Kanalmittelachse durch den Gurtkanal verläuft.

Die Fixiervorrichtung kann so ausgebildet sein, dass sie ein in Sperrstellung in den freien Querschnitt des Gurtkanals verlagertes Fixierelement umfasst. Aufgrund des verringerten Querschnitts des Gurtkanals in der Sperrstellung der Fixiervorrichtung kann der Traggurt nicht ohne erhöhten Kraftaufwand im Gurtkanal verschoben werden, so dass eine Fixierung erreicht ist.

In besonderer Ausgestaltung ist die Fixervorrichtung an der Beinplatte gehalten, insbesondere als an der Beinplatte gehaltene Klampe ausgebildet. Um die Sperrstellung dieser Fixiervorrichtung zu erreichen, greift der Benutzer zwischen einen freien Kanalabschnitt des Gurtkanals und zieht den Traggurt seitlich aus dem Gurtkanal heraus, um ihn an der Klampe festzulegen. Zweckmäßig ist hierzu die Klampe auf einer Flachseite der Beinplatte ausgebildet.

In einer Ausgestaltung ist die Fixiervorrichtung auf dem Traggurt gehalten. So kann die Fixiervorrichtung ein auf dem Traggurt gehaltenes Fixierelement umfassen. Ein Ausführungsbeispiel des Fixierelementes kann eine auf dem Traggurt aufgesteckte Klammer sein. Das Fixierelement kann auch derart gestaltet sein, dass es formschlüssig in den Traggurt eingreift, z. B. den Traggurt durchdringt oder dgl.

In Weiterbildung weist das an der Anschlusseinheit gehaltene Arbeitsgerät einen Führungsschaft und einen an einem Ende angeordneten Werkzeugkopf auf, wobei der Gurtkanal der Beinplatte mit Abstand zum Führungsschaft liegt.

Es ist vorgesehen, dass der Traggurt zwischen der Beinplatte und seinem mit dem Schultergurt wirkverbundenen Ende über ein Koppelschloss mit einem Seitengurt der Tragvorrichtung verbunden ist. Dabei ist vorgesehen, das Koppelschloss auf dem Traggurt längsverschiebbar anzuordnen. Das gibt dem Benutzer die Möglichkeit, den Verbindungspunkt zwischen Seitengurt und Traggurt nach Belieben und Arbeitssituation zu verstellen. Das Koppelschloss weist zumindest eine Klemme auf, über die das Koppelschloss längs dem Traggurt festlegbar ist. Um eine gewählte Einstellung zu fixieren, besitzt das Koppelschloss vorteilhaft eine Klemme mit zumindest einem Betätigungsflügel, durch den das Koppelschloss in zumindest einer Richtung längs des Traggurtes festlegbar ist. Die Klemme weist insbesondere ein Federelement auf, das die Klemme in Sperrstellung hält. Das Federelement ist insbesondere als Schenkelfeder ausgebildet. Es kann zweckmäßig sein, das Federelement einteilig mit der Klemme auszubilden.

In vorteilhafter Ausgestaltung der Erfindung umfasst das Koppelschloss zwei Klemmen mit jeweils einem Betätigungsflügel. Das Koppelschloss weist somit zwei Betätigungsflügel auf. Hierbei unterbindet jede Klemme das Durchrutschen des Traggurtes in je einer Längsrichtung des Traggurtes, so dass das Koppelschloss auf dem Traggurt vollständig fixiert ist. Um das Koppelschloss entlang beider Längsrichtungen des Traggurtes, also frei zu verschieben, sind beide Betätigungsflügel gemeinsam zu betätigen, d. h. beide Klemmen zu lösen.

Die Anordnung der Betätigungsflügel ist dabei so getroffen, dass die Betätigungsflügel durch zwei Finger eines Benutzers gemeinsam zu betätigen sind. Der Benutzer kann so bei angelegter Tragvorrichtung die Klemme mit zwei Fingern einer Hand betätigen, die Klemme lösen und eine gewünschte Längsverstellung auf dem Traggurt ausführen. Eine Entlastung des Traggurtes ist für die Verschiebung des Koppelschlosses auf dem Traggurt nicht nötig.

Eine weitere Ausgestaltung sieht vor, dass die Beinplatte ein auswechselbares Beinpolster trägt. Insbesondere besitzt die Beinplatte Mittel zur lösbaren Anbindung des Beinpolsters. Die Mittel sind insbesondere einteilig mit der Beinplatte ausgebildet. Zweckmäßig umfasst die Beinplatte eine Trägerplatte, wobei ein steifer Rand des Beinpolsters von Führungsleisten der Trägerplatte übergriffen ist und dadurch an der Trägerplatte gehalten ist. In einfacher Weise kann der Benutzer vor Ort ein gewünschtes oder zweckmäßiges Beinpolster einschieben. Bei einem Wechsel des Benutzers kann der Benutzer ein vorhandenes Beinpolster durch ein personifiziertes Beinpolster austauschen, insbesondere werkzeuglos austauschen.

Nach einer weiteren Ausgestaltung ist bei einer Tragvorrichtung aus zumindest einer Rückenplatte, zumindest einem Schultergurt und einem Hüftgurt die Rückenplatte über eine zumindest teilweise verschließbare, textile Aufnahmetasche mit dem Hüftgurt und/oder dem Schultergurt verbunden. Dadurch kann in einfacher Weise ein beschädigter Gurt ausgetauscht oder ein verschmutzter Gurt demontiert, gewaschen und wieder montiert werden. Dies kann insbesondere werkzeuglos erfolgen.

Diese Form der Verbindung zwischen einer Rückenplatte und einem Hüftgurt ist vorteilhaft bei einem Tragsystem für einen auf dem Rücken getragenen Akku (Rückenakku) anwendbar und zu nutzen. So kann zweckmäßig auf der Rückenplatte ein Akku angeordnet sein. Der Akku kann in Form eines Akkupacks ausgebildet sein. Der Akku oder der Akkupack bildet die Last, die von dem erfindungsgemäßen Tragsystem getragen wird, wobei sich die Last (Rückenplatte mit Akkupack) mittels der Textiltasche z. B. an einem Hüftgurt abstützt. Der Akku bzw. der Akkupack dient dem Betrieb eines elektrischen Arbeitsgerätes.

In einer weiteren Ausgestaltung des Tragsystems kann an der Rückenplatte des Tragsystems eine Einhängung für ein Arbeitsgerät vorgesehen sein, z. B. des elektrischen Arbeitsgerätes. Es kann auch vorteilhaft sein, das Arbeitsgerät am Hüftgurt zu tragen. Das Arbeitsgerät kann vom Benutzer auch ausschließlich in der Hand gehalten werden. Vorteilhaft ist die textile Aufnahmetasche am Hüftgurt und/oder am Schultergurt ausgebildet, wobei ein Abschnitt der Rückenplatte leicht demontierbar in der Aufhahmetasche gehalten ist. Hierzu kann es zweckmäßig sein, wenn der in der Aufnahmetasche gehaltene Abschnitt der Rückenplatte mittels einer insbesondere textilen Lasche in der textilen Aufnahmetasche gesichert ist.

Weitere vorteilhafte Ausführungsbeispiele ergeben sich durch beliebige Kombination der genannten Merkmale und der beschriebenen P Ausführungsbeispiele, die im Schutzumfang des Gegenstands des Anspruchs 1 liegen.

Ferner ergeben sich Ausgestaltungen der Erfindung aus den Ansprüchen, der Beschreibung und der Zeichnung, in der nachstehend im Einzelnen beschriebene Ausführungsbeispiele der Erfindung wiedergegeben sind. Es zeigen:
- Fig. 1: eine perspektivische Darstellung einer Tragvorrichtung bestehend aus Rückenplatte, Hüftgurt, Schultergurten, Seitengurt und Traggurt für eine Beinplatte mit einem Beinpolster,
- Fig. 2: eine Ansicht auf die Tragvorrichtung nach Fig. 1 von vorne,
- Fig. 3: eine Teilansicht auf die Brustseite der Tragvorrichtung mit einem auf dem Traggurt verschiebbaren Koppelschloss,
- Fig. 4: eine vergrößerte Darstellung des Koppelschlosses nach Fig. 3 mit eingehängtem Seitengurt und betätigten Betätigungsflügeln,
- Fig. 5: eine Seitenansicht der Tragvorrichtung nach Fig. 1 mit Blick auf die Beinplatte,
- Fig. 6: eine Ansicht der Tragvorrichtung nach Fig. 1 von hinten,
- Fig. 7: eine Seitenansicht der Tragvorrichtung mit Blickrichtung auf den Seitengurt,
- Fig. 8: eine Draufsicht auf die Tragvorrichtung nach Fig. 1 von oben,
- Fig. 9: eine weitere perspektivische Darstellung der Tragvorrichtung nach Fig. 1 mit Blick auf die Beinplatte,
- Fig. 10: eine schematische Darstellung eines auf der Beinplatte vorgesehenen Gurtkanals in einer ersten Ausführungsform mit Verlauf des Traggurtes,
- Fig. 11: eine perspektivische Darstellung eines weiteren Ausführungsbeispiels einer Beinplatte mit Gurtkanal und Zubehörteilen,
- Fig. 12: eine perspektivische Ansicht auf den Grundkörper der Beinplatte nach Fig. 11 mit auswechselbarem Anlagepolster,
- Fig. 13: eine Ansicht auf die Polsterseite der Beinplatte,
- Fig. 14: eine Ansicht auf die Tragseite der Beinplatte nach Fig. 13,
- Fig. 15: eine Draufsicht auf die Beinplatte nach Fig. 13,
- Fig. 16: eine Seitenansicht der Beinplatte nach Fig. 13,
- Fig. 17: eine Seitenansicht der Beinplatte nach Fig. 13 mit einem geschlossenen Gurtkanal und einer Fixiervorrichtung zur unverschieblichen Festlegung der Beinplatte auf dem Traggurt,
- Fig. 18: eine Draufsicht auf die Beinplatte nach Fig. 5 mit offenem Gurtkanal und auf dem Traggurt gehaltenen Fixierelementen,
- Fig. 19: eine Seitenansicht auf den Gurtkanal einer Beinplatte mit auf dem Traggurt befestigten Fixierelementen gemäß Fig. 18,
- Fig. 20: eine Draufsicht auf eine Beinplatte mit einer weiteren Ausgestaltung einer Fixiervorrichtung nach Art einer Klammer,
- Fig. 21: eine Seitenansicht auf den Gurtkanal der Beinplatte mit einer durch die Klammer gebildeten Fixiervorrichtung,
- Fig. 22: eine Draufsicht auf den Gurtkanal einer Beinplatte mit einem verlagerbaren Kanalabschnitt,
- Fig. 23: eine Seitenansicht des Gurtkanals der Beinplatte gemäß Fig. 22,
- Fig. 24: eine Draufsicht auf den Gurtkanal einer Beinplatte mit an der Beinplatte ausgebildeter Fixiereinrichtung,
- Fig. 25: eine Ansicht auf den oberen Abschnitt einer Beinplatte mit einem durch Ösen gebildeten Gurtkanal gemäß Fig. 24,
- Fig. 26: eine Seitenansicht auf einen geschlossenen Gurtkanal einer Beinplatte mit im Gurtkanal angeordnetem Fixierelement,
- Fig. 27: in vergrößerter Darstellung das im Gurtkanal angeordnete Fixierelement gemäß Fig. 26,
- Fig. 28: eine Ansicht der Rückenplatte einer Tragvorrichtung mit einer lösbaren Verbindung zwischen der Rückenplatte und dem Hüftgurt durch eine verschließbare Textiltasche,
- Fig. 29A bis 29C: in schematischer Darstellung eine zwischen dem unteren Ende der Rückenplatte und dem Hüftgurt ausgebildete lösbare Verbindung durch eine verschließbare Textiltasche,
- Fig. 30A bis 30C: in schematischer Darstellung eine lösbare Anbindung der Schultergurteinheit am oberen Ende der Rückenplatte durch eine verschließbare Textiltasche,
- Fig. 31: eine Ansicht des oberen Endes der Rückenplatte mit einem über ein Kugelgelenk angebundenen Trägerstück,
- Fig. 32 und 33: in schematischer Darstellung die Beweglichkeit des Trägerstücks relativ zur Rückenplatte,
- Fig. 34: eine Draufsicht auf das obere Ende der Rückenplatte mit angebundener Schultergurteinheit und elastischen Bändern zur Positionierung der Schultergurteinheit relativ zur Rückenplatte,
- Fig. 35: eine Draufsicht auf die Trägerplatte der Schultergurteinheit mit angeordneten elastischen Bändern,
- Fig. 36: eine Seitenansicht auf die Trägereinheit mit elastischen Bändern,
- Fig. 37: in Seitenansicht ein erster Arbeitsmodus I eines Freischneiders,
- Fig. 38: eine Draufsicht auf das von einem Benutzer geführte Arbeitsgerät in einem Arbeitsmodus I,
- Fig. 39: eine Seitenansicht eines Benutzers mit einem Freischneidegerät in einem Arbeitsmodus II,
- Fig. 40: eine Draufsicht auf den Benutzer mit dem Freischneidegerät nach Fig. 39 im Arbeitsmodus II.

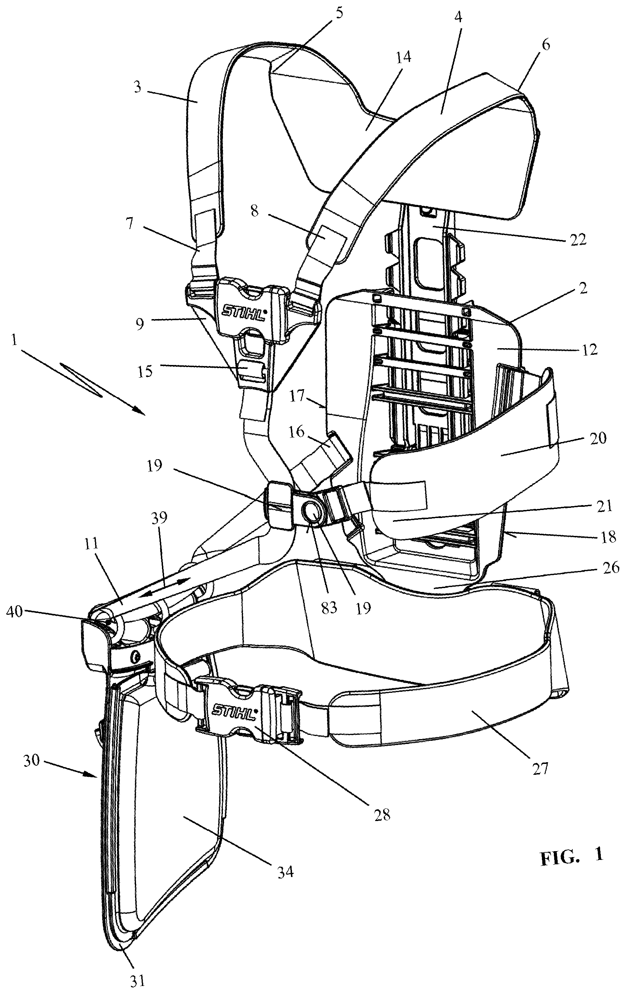

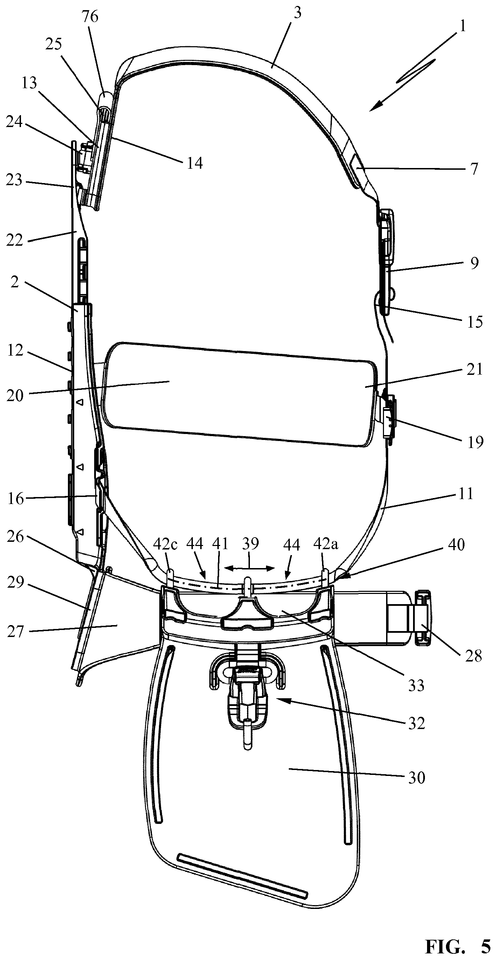

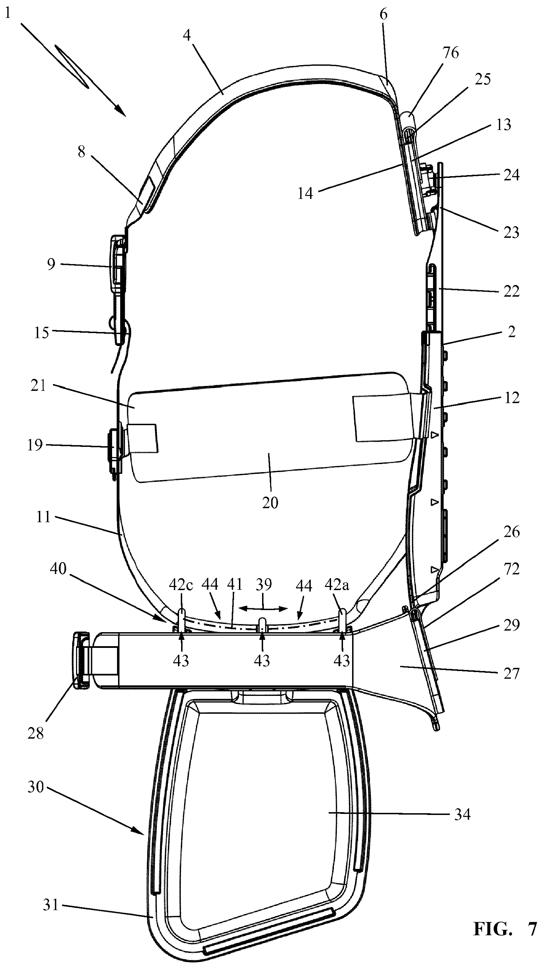

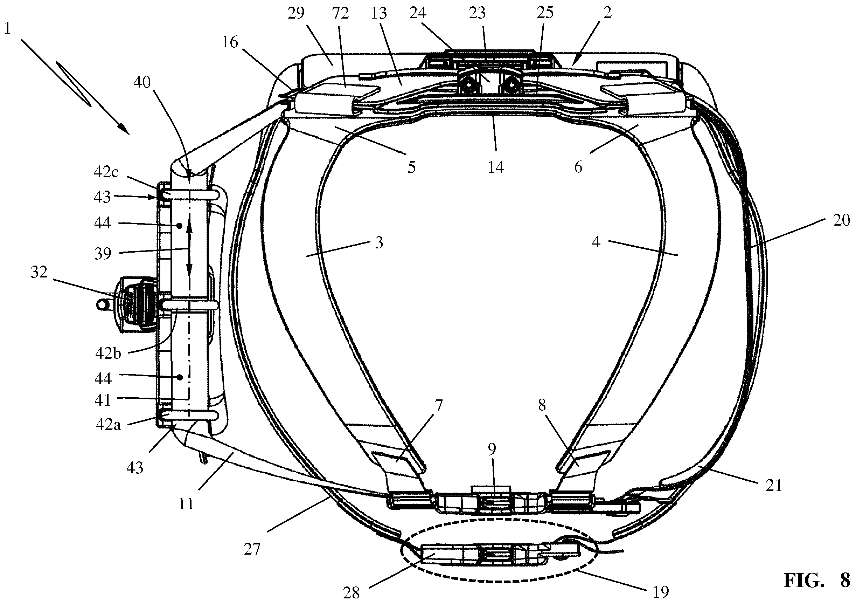

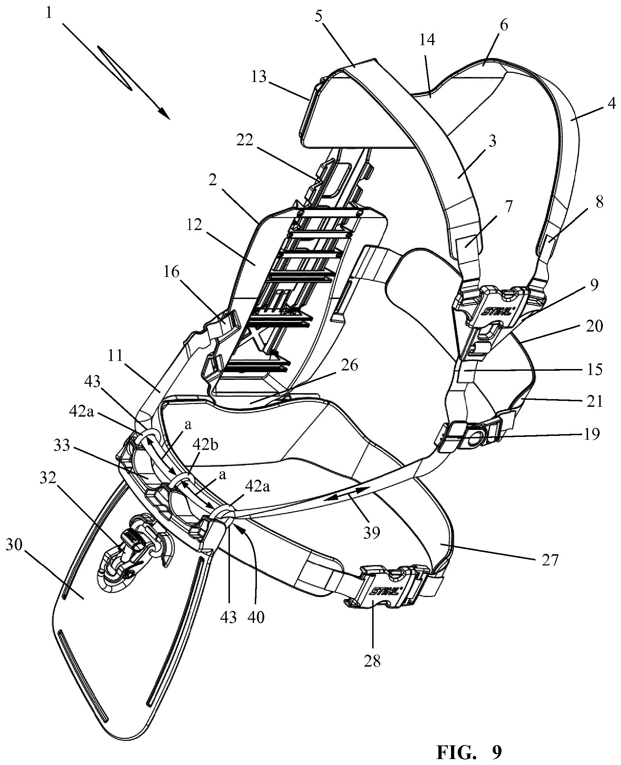

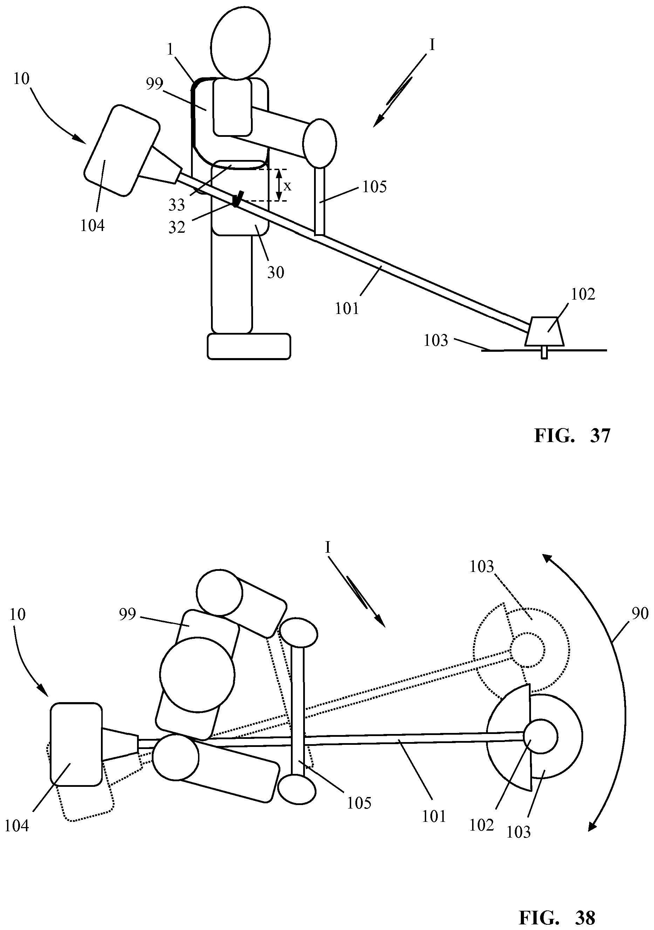

In den Figuren 1 bis 9 ist ein erstes Ausführungsbeispiel einer erfindungsgemäßen Tragvorrichtung 1 dargestellt, welche zur Benutzung eines Freischneiders, einer Motorsense, eines Dickichtmessers oder dgl. Arbeitsgerät 10 vorgesehen ist, wie es in den Figuren 37 bis 40 schematisch dargestellt ist.

Die im Ausführungsbeispiel nach den Figuren 1 bis 9 dargestellte Tragvorrichtung 1 besteht im Wesentlichen aus einer Rückenplatte 2, die aus einer Grundplatte 12 und einem in der Grundplatte teleskopierbar gehaltenen Auszug 22 besteht. Am oberen Ende 23 des Auszugs 22 ist ein Kugelgelenk 24 angeordnet, welches eine Montageplatte 25 trägt. Die Montageplatte 25 ist in einer Aufnahmetasche 13 einer Schultergurteinheit 14 fixiert. Die Schultergurteinheit 14 weist zwei Schultergurte 3 und 4 auf, deren hintere Enden 5 und 6 über die Schultergurteinheit 14 miteinander verbunden sind. Die vorderen Enden 7, 8 der Schultergurte sind im Ausführungsbeispiel an einer Brustplatte 9 befestigt.

Von der Brustplatte 9 verläuft ein Traggurt 11 abwärts zu einer Beinplatte 30 und von dort aus seitwärts zurück zur Grundplatte 12 der Rückenplatte 2. Der Traggurt 11 ist mit seinem einen Ende 15 vorzugsweise längenverstellbar mit der Brustplatte oder zweckmäßig mit einem Schloss auf der Brustplatte 9 verbunden; das andere Ende 16 des Traggurtes 11 ist - vorzugsweise längenverstellbar - mit dem unteren Seitenabschnitt der Grundplatte 12 der Rückenplatte 2 verbunden. Der Traggurt 11 ist insbesondere benachbart zu einem (ersten) Längsrand 17 der Grundplatte 12 an der Grundplatte 12 befestigt.

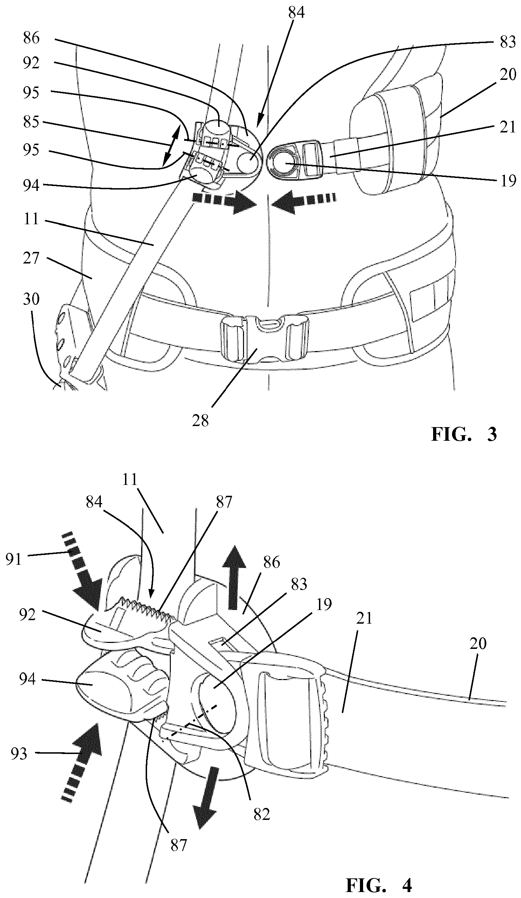

An dem dem ersten Längsrand 17 der Grundplatte 12 gegenüberliegenden zweiten Längsrand 18 der Grundplatte 12 ist im Bereich des oberen Abschnitts der Grundplatte 12 ein Seitengurt 20 angebunden. Das vordere Ende 21 des Seitengurtes 20 ist über ein Verbindungselement 19 mit einem auf dem Traggurt 11 angeordneten Koppelschloss 84 verbunden. Das Koppelschloss 84 ist in den Fig. 3 und 4 vergrößert und - in Fig. 4 - auf dem Traggurt 11 verschiebbar dargestellt.

Das insbesondere eine eigenständige Erfindung bildende Koppelschloss 84 ist zwischen der Beinplatte 30 und der Brustplatte 9 auf dem Traggurt 11 gehalten. Das Koppelschloss 84 besitzt einen Sperr- und einen Freigabezustand. Im Sperrzustand ist jegliche Bewegung des Koppelschlosses 84 entlang der Längsrichtung des Traggurtes 11 in Richtung des Doppelpfeils 85 blockiert. Vorzugsweise wirken die Klemmen 87 des Koppelschlosses 84 in beide Richtungen des Doppelpfeils 85 selbsthemmend. In Freigabestellung der Klemmen 87 lässt sich das Koppelschloss 84 und damit das Verbindungselement 19 als vorderes Ende 21 des Seitengurts 20 kontinuierlich entlang des Traggurts 11 verschieben.

Die Klemme 87 weist insbesondere ein nicht näher dargestelltes Federelement auf, das die Klemme 87 in der Sperrstellung hält. Das Federelement kann insbesondere als Schenkelfeder ausgebildet sein. Es kann zweckmäßig sein, das Federelement einteilig mit der Klemme 87 auszubilden.

Im Ausführungsbeispiel beinhaltet das Koppelschloss 84 zwei Klemmen 87 mit entgegengesetzt zueinander bewegbaren Betätigungsflügeln 92, 94, wobei jeder der Betätigungsflügel 92, 94 auf eine Klemme 87 wirkt, die eine Verschiebung jeweils entlang einer Richtung des Traggurts 11 unterbindet. Um das Koppelschloss 84 in einer Richtung längs des Traggurtes 11 zu verschieben, wird vorteilhaft zumindest eine Klemme 87 über einen Betätigungsflügel 92 oder 94 betätigt. Insbesondere können beide Betätigungsflügel 92 und 94 gemeinsam einhändig entsperrt werden, so dass das Koppelschloss 84 in beiden Richtungen längs des Traggurtes 11 frei verschiebbar ist. Wie in Fig. 4 gezeigt, werden beide Betätigungsflügel 92 und 94 in Pfeilrichtung 91 und 93 aufeinander zu bewegt. Dadurch werden sowohl die Klemmung des einen Betätigungsflügels 92 mit dem Traggurt 11 und die Klemmung des anderen Betätigungsflügels 94 mit dem Traggurt 11 aufgehoben. Vorteilhaft liegen die Schwenkachsen 95 der Betätigungsflügel 92, 94 winklig zueinander. Dadurch wird ein einhändiger Zugriff durch den Benutzer erleichtert.

Das Koppelschloss 84 weist eine Aufnahme 83 für das Verbindungselement 19 auf, welches das Ende des Seitengurtes 20 bildet. Das Verbindungselement 19 ist in der Ebene des Koppelschlosses 84 schwenkbar in der Aufnahme 83 gehalten. Eine Schwenkachse 82 des Verbindungselementes 19 in der Aufnahme 83 liegt senkrecht zu einer Schlossplatte 86. Auf der Schlossplatte 86 ist das Koppelschloss 84 angeordnet. Die Verbindung von Aufnahme 83 und Verbindungselement 19 ist vorteilhaft als Schnappverbindung ausgeführt.

Die Verschiebung des Koppelschlosses 84 entlang des Traggurtes 11 ist einhändig und unter Last, d.h. ohne Lösen oder Entlasten der Tragvorrichtung 1 oder deren einzelner Gurte wie den Traggurt 11 oder den Seitengurt 20 möglich. Die Verschiebung des Koppelschlosses 84 auf dem Traggurt 11 ist insbesondere kontinuierlich und ohne Aufhebung der Verbindung zwischen Seitengurt 20 und Traggurt 11 möglich. Der Seitengurt 20 wird demnach nicht vom Traggurt abgekoppelt, sondern lediglich entlang dessen in eine andere Position verschoben. Zum Verschieben des Seitengurtes 20 werden die Betätigungsflügel 92 und 94 durch zwei Finger des Benutzers gemeinsam in Pfeilrichtung 91 und 93 aufeinander zu verschwenkt. Das entsperrte Koppelschloss 84 kann nun in Richtung des Doppelpfeils 82 auf dem Traggurt 11 nach dem Wunsch des Benutzers verschoben werden. Dabei kann das Verbindungsglied 19 in der Aufnahme 83 schwenken. Die Führung des Seitengurtes 20 ist nicht behindert.

Das vordere Ende 21 des Seitengurts 20 liegt stets unterhalb der Brustplatte 9. Eine Verdrehung der Brustplatte 9 aufgrund der durch den Traggurt 11 in die Brustplatte 9 eingeleiteten Zugkräfte kann reduziert werden, da der Seitengurt 20 unterhalb der Brustplatte 9 mit dem Traggurt 11 verbunden ist und dadurch bereits einen Teil der Kräfte über den Seitengurt 20 in die Rückenplatte 2 geleitet wird.

Durch eine Längsverschiebung des Koppelschlosses 84 auf dem Traggurt 11, ändert sich die Kräfteverteilung zwischen dem Schultergurt 3 und dem Seitengurt 20. Ein Benutzer kann dies nutzen, um von Zeit zu Zeit die auf ihn wirkende Belastung zu variieren. Durch die einhändige Bedienbarkeit des Koppelschlosses 84 ist eine Verstellung der Lastverteilung ohne Ablegen des Traggurtes 1 und insbesondere während der Arbeit möglich.

Das untere Ende der Rückenplatte 2, im Ausführungsbeispiel das untere Ende 26 der Grundplatte 12, trägt einen Hüftgurt 27, der mit einem vorderen Verschluss 28 zu schließen ist.

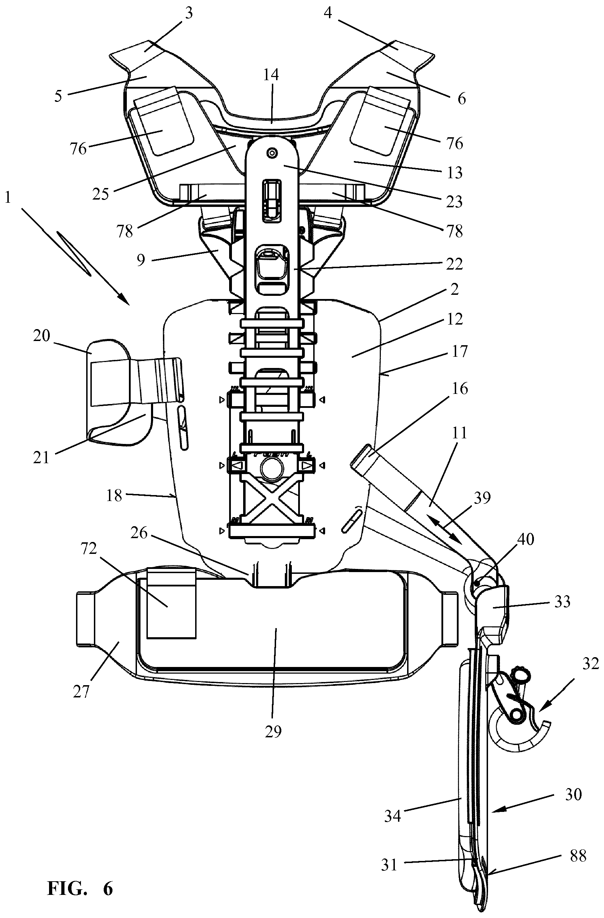

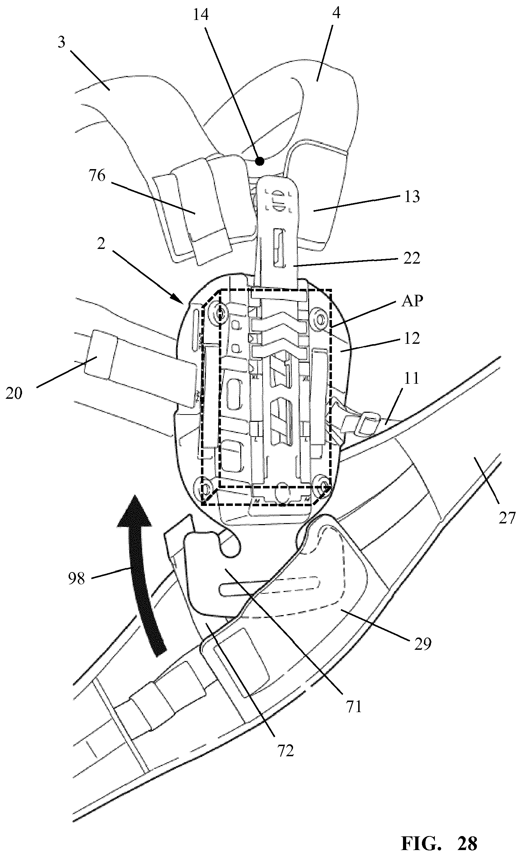

Wie aus der Ansicht von hinten gemäß Fig. 6 zu erkennen, ist am Hüftgurt 27 eine textile Aufnahmetasche 29 ausgebildet, in welcher das untere Ende 26 der Rückenplatte 2 aufgenommen ist. Fig. 28 zeigt, wie das Ende 26 der Rückenplatte 2 aus der textilen Aufnahmetasche 29 gelöst werden kann. Zunächst ist eine Lasche 72 zu lösen, die einen Endflansch 71 des Endes 26 übergreift. Danach kann das untere Ende 26 der Rückenplatte 2 in Pfeilrichtung aus der textilen Aufnahmetasche29 herausgeschwenkt werden.

Die Montage erfolgt in entsprechend umgekehrter Reihenfolge, wie nachstehend noch beschrieben wird. Die lösbare Verbindung der Rückenplatte 2 mit dem Hüftgurt 27 - und anderen Elementen der Tragvorrichtung 1 - bildet insbesondere auch eine eigenständige Erfindung.

Nachfolgend werden verschiedene Ausführungsformen einer Beinplatte 30 mit unterschiedlich ausgebildetem Gurtkanal 40 und verschiedene funktional zwischen dem Traggurt 11 und der Beinplatte 30 angeordnete Fixiervorrichtungen 50 beschrieben. Die beschriebenen Erfindungen sind nicht auf die gezeigten Ausführungsbeispiele beschränkt, sondern allgemein auf Beinplatten mit unterschiedlichen Gurtkanälen. Hierbei kann der Kanal beispielsweise integral oder separat, geschlossen oder unterbrochen an der Trägerplatte ausgebildet sein und der Kanalquerschnitt insbesondere flach oder rund ausgeführt sein. Der Traggurt 11 ist im Ausführungsbeispiel als Gurt ausgebildet, kann jedoch insbesondere auch als Seil oder dergleichen Verbindungsmittel ausgeführt sein.

Die Beinplatte 30 besteht im ersten Ausführungsbeispiel aus einer insbesondere steifen Trägerplatte 31, welche eine Anschlusseinheit 32 trägt. Die Anschlusseinheit 32 liegt mit einem Abstand x (Fig. 37) unterhalb eines oberen Randes 33 der Trägerplatte 31. Am oberen Rand 33 der Trägerplatte 31 ist ein Gurtkanal 40 ausgebildet, der eine Kanalmittelachse 41 aufweist. In Längsrichtung der Kanalmittelachse 41 ist der Traggurt 11 durch den Gurtkanal 40 geführt, wobei die Trägerplatte 30 in Richtung des Doppelpfeils 39 auf dem Traggurt 11 verschiebbar angeordnet ist.

Die Kanalmittelachse 41 des Gurtkanals 40 kann gestreckt gerade verlaufen; vorteilhaft verläuft die Kanalmittelache 41 leicht bogenförmig gekrümmt. Insbesondere ist der Verlauf der Kanalmittelachse 41 dem Verlauf des Traggurtes 11 im Bereich der Beinplatte 30 angenähert.

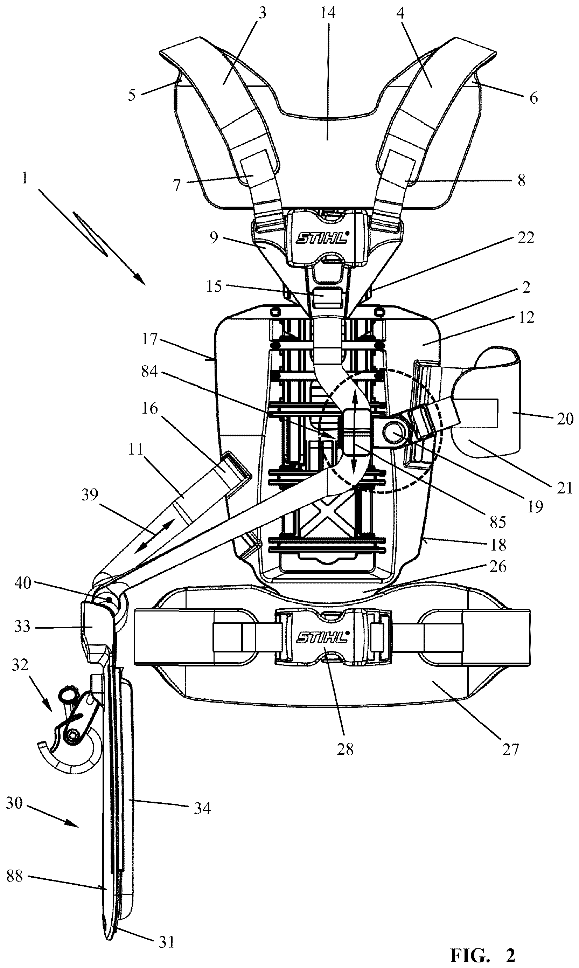

Wie insbesondere die Figuren 2, 6 und 8 zeigen, ist der Gurtkanal 40 in einem ersten Ausführungsbeispiel aus einzelnen Kanalabschnitten 42a, 42b, 42c zusammengesetzt, die in Richtung der Kanalmittelachse 41 mit Abstand a zueinander liegen. Die Abstände a sind im gezeigten Ausführungsbeispiel der Figuren 1, 2 und 5 bis 9 gleich; es kann vorteilhaft sein, die Abstände a zwischen den Kanalabschnitten 42a, 42b, 42c unterschiedlich auszubilden.

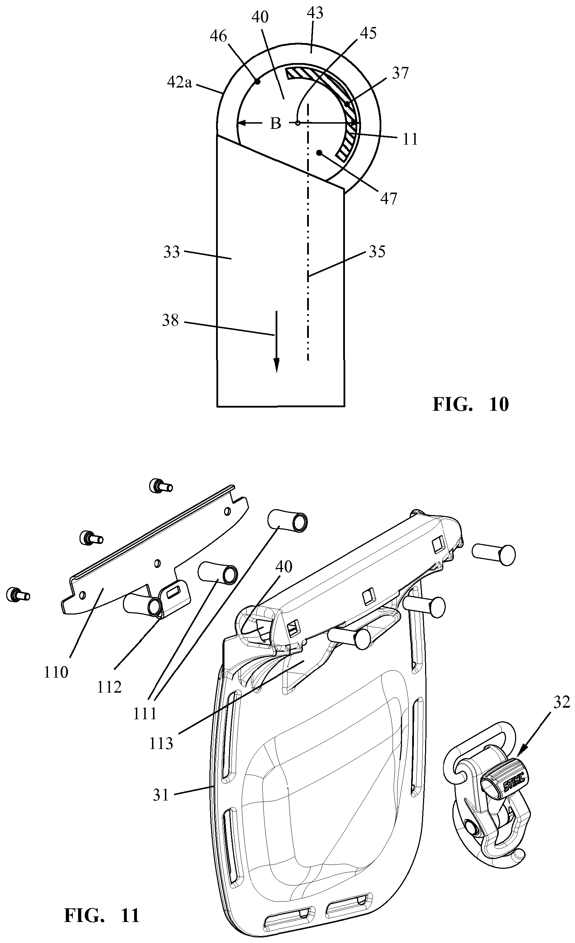

Bei einer Tragvorrichtung 1 zum Tragen eines handgeführten Arbeitsgerätes 10 durch einen Benutzer, mit mindestens einem Schultergurt 3, 4 und mit einer seitlichen Beinplatte 30 mit einer Anschlusseinheit 32 zum Ankoppeln des Arbeitsgerätes 10 kann es vorteilhaft sein, die Kanalquerschnittsfläche 47 des Gurtkanals 40 der Beinplatte 30 mindestens doppelt, insbesondere 3-mal so groß und höchstens 10-mal so groß auszuführen wie die Gurtquerschnittsfläche 37, wie z. B. Fig. 10 zeigt.

Im ersten Ausführungsbeispiel ist der Gurtkanal 40 durch Kanalabschnitte 42a, 42b, 42c in Form von Gurtösen 43 gebildet. Die Gurtösen 43 bestehen vorteilhaft aus Metall und sind in dem Material der Beinplatte 30 gehalten. Bevorzugt bildet hierzu die Trägerplatte 31 einen verdickten Rand 33 aus. Die Gestaltung der Kanalabschnitte 42a, 42b, 42c durch Gurtösen 43 ist eine von mehreren Möglichkeiten. In weiteren Ausführungsbeispielen werden nachstehend Alternativen zur Ausbildung eines Gurtkanals 40 angegeben. Unabhängig von der Art der Ausbildung des Gurtkanals 40 sind die angegebenen Vorteile und Merkmale auf alle Ausführungsbeispiele übertragbar.

Die Beinplatte 30 trägt auf ihrer der Anschlusseinheit 32 für das Arbeitsgerät 10 abgewandten Außenseite 88 ein insbesondere flächiges Beinpolster 34.

Die Rückenplatte 2 ist derart gestaltet, dass sowohl der Auszug 22 als auch die Grundplatte 12 als jeweils einteilige Spritzgussteile zu fertigen sind.

Die gezeigte Tragvorrichtung 1 zum Tragen eines handgeführten Arbeitsgerätes 10 durch einen Benutzer 99 (Fig. 37 bis 40) wird derart angelegt, dass die Schultergurte 3, 4 zur Anlage der Tragvorrichtung 1 auf der Schulter eines Benutzers 99 aufliegen. Die seitliche Beinplatte 30 ist mit dem Traggurt 11 an der Tragvorrichtung 1 gehalten, wobei das eine Ende 15 des Traggurtes 11 mit den Schultergurten 3 und 4 wirkverbunden ist. Im gezeigten Ausführungsbeispiel wird die Wirkverbindung durch die Brustplatte 9 gewährleistet, wobei die vorderen Enden 7, 8 der Schultergurte 3, 4 an der Basis der Brustplatte 9 festliegen, während das Ende 15 des Traggurtes 11 - vorzugsweise über eine lösbare Steckverbindung - im Bereich der Unterseite der Brustplatte 9 mit dieser verbunden ist.

Der Traggurt 11 verläuft durch den Gurtkanal 40, wobei die vorzugsweise durch die Gurtösen 43 gebildeten Kanalabschnitte 42a, 42b und 42c mit Abstand a zueinander liegen. Zwischen den Kanalabschnitten 42a, 42b und 42c ist somit ein Freiraum 44 ausgebildet, in dem der Traggurt 11 ungeführt liegt.

In Fig. 10 ist schematisch die Gurtöse 43 eines Kanalabschnitts 42a dargestellt. Das Zentrum 45 liegt jenseits der Ebene 35 der Trägerplatte 31, wobei die Ebene 35 in Umfangsrichtung der Beinplatte 30 leicht gewölbt ausgebildet sein kann. Das Zentrum 45 liegt auf der Seite der Ebene 35, auf der auch die Anschlusseinheit 32 liegt. Die maximale Breite B des Gurtkanals 40 entspricht vorteilhaft mindestens der doppelten Gurtbreite geteilt durch π. Der Traggurt 11 weist vorteilhaft eine Gurtquerschnittsform auf, die eine eckige Kontur zeigt. Eine geeignete Querschnittsform des Traggurtes 11 ist eine Rechteckform.

Wird in die Beinplatte 30 die Gewichtskraft in Pfeilrichtung 38 gemäß Fig. 10 eingeleitet, so wird diese über die Gurtöse 43 in den Traggurt 11 eingeleitet, der sich aufgrund seiner Flexibilität an die Rundung der Gurtöse 43 anlegt. Im Belastungsfall liegt der Traggurt 11 im Wesentlichen auf der Seite der Ebene 35 der Trägerplatte 31, die das Beinpolster 34 trägt.

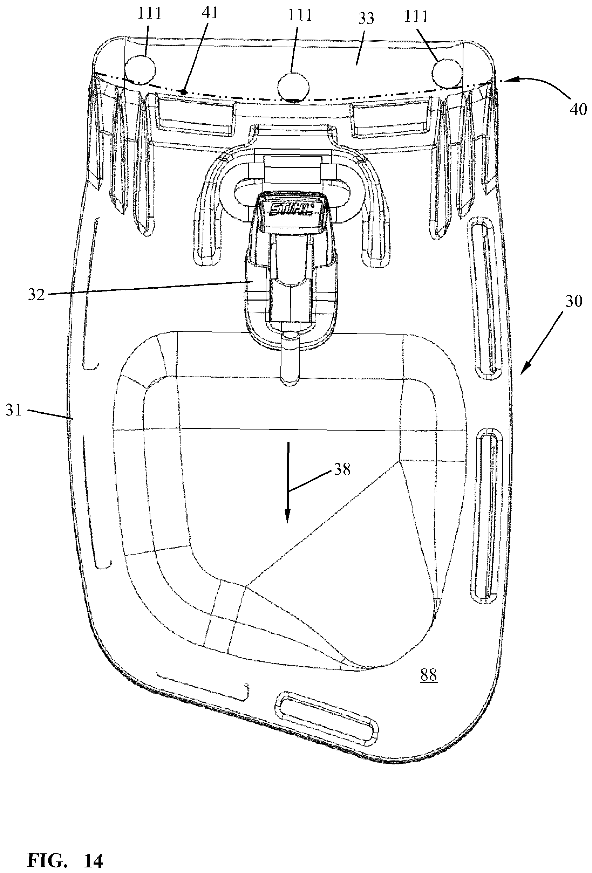

In den Figuren 11 bis 16 ist ein weiteres Ausführungsbeispiel einer Beinplatte 30 gezeigt und wird nachfolgend im Einzelnen beschrieben.

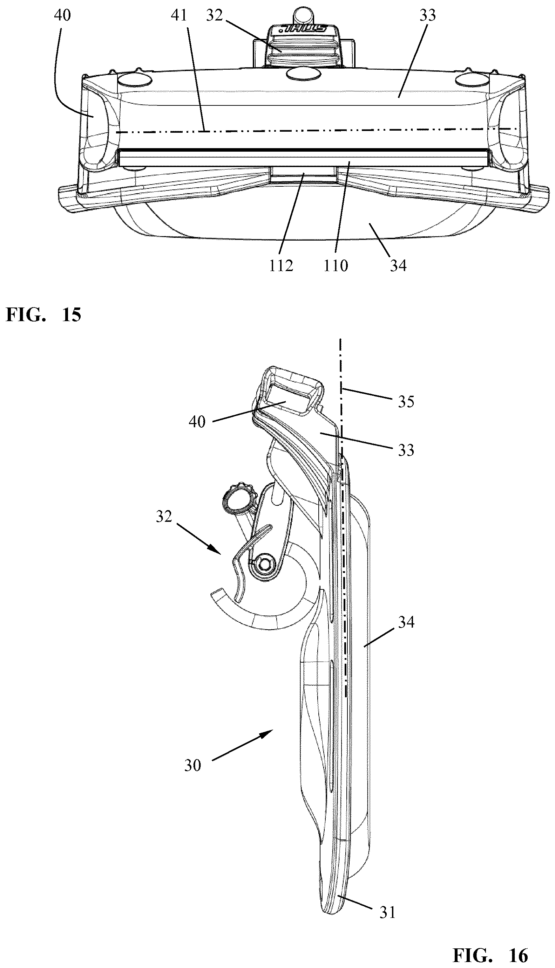

Der Grundaufbau der Beinplatte entspricht der in den Figuren 1, 2 und 5 bis 9 gezeigten Beinplatte 30 und unterscheidet sich von dieser in einer anderen Ausführungsform des Gurtkanals 40. Die Beinplatte 30 besteht allgemein aus einer - insbesondere harten - Trägerplatte 31, die einen oberen Rand 33 aufweist. Der obere Rand 33 ist - wie insbesondere die Figuren 15 und 16 zeigen - verdickt ausgeführt. Die Innenseite der Trägerplatte 31 ist dem Benutzer 99 zugewandt, die Außenseite 88 ist dem Benutzer abgewandt. Die Anschlusseinheit 32 liegt auf der dem Arbeitsgerät 10 zugewandten Außenseite 88 der Trägerplatte 31.

Auf der der Anschlusseinheit 32 abgewandten (Innen-) Seite der Trägerplatte 31 ist ein insbesondere flächiges Beinpolster 34 angeordnet.

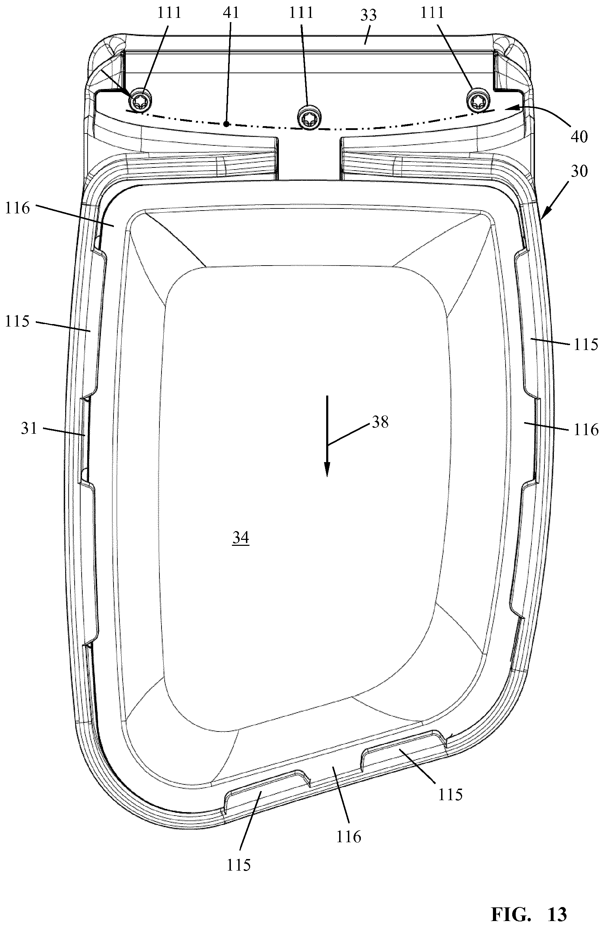

Wie insbesondere Fig. 11 zeigt, erstreckt sich am oberen Rand 33 der Beinplatte 30 der Gurtkanal 40. Auf seiner Unterseite weist der Gurtkanal 40 Ausbrüche auf. Die zum Benutzer gerichtete innere Längsseite des Gurtkanals 40 ist durch einen Abschlussdeckel 110 verschlossen. Im Gurtkanal 40 ist der als Flachband ausgebildete Traggurt 11 (Fig. 13) auf beweglich im Gurtkanal 40 gelagerten Rollen 111 geführt. Der Abschlussdeckel 110 dient zur innenseitigen Lagerung der Rollen 111. Im Ausführungsbeispiel nach den Fig. 11 und 13 erstreckt sich eine Zunge 112 des Abschlussdeckels 110 durch eine Öffnung 113 von der Innenseite der Trägerplatte 31 zur Außenseite der Trägerplatte 31. Die Zunge 112 ist mit der Anschlusseinheit 32 verbunden. Der Abschlussdeckel 110 ist insbesondere metallisch.

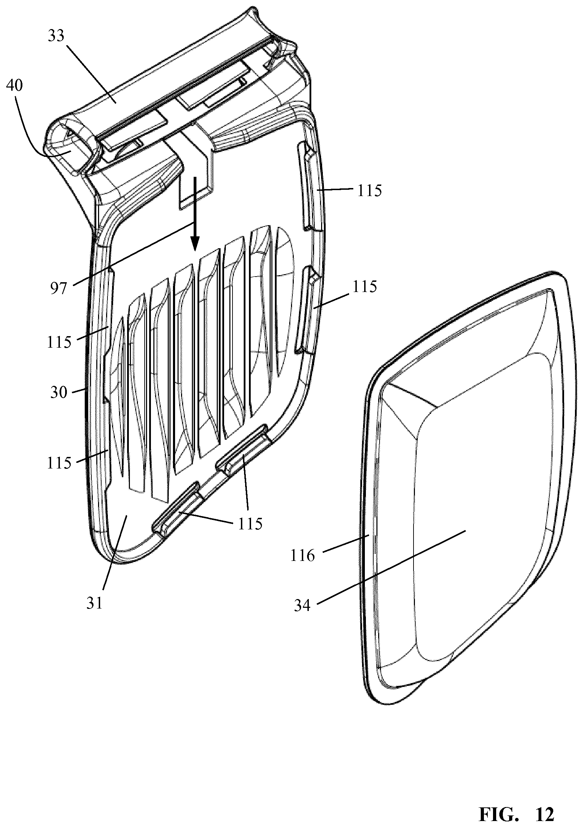

In den Fig. 12 und 13 ist dargestellt, dass das Beinpolster 34 vorteilhaft auswechselbar an der Beinplatte 30 gehalten ist. Insbesondere besitzt die Beinplatte 30 Mittel zur lösbaren Anbindung des Beinpolsters 34. Diese Mittel sind insbesondere einteilig mit der Trägerplatte 31 der Beinplatte 30 ausgebildet.

Insbesondere ist vorgesehen, dass die Beinplatte 30 an den Rändern Führungsleisten 115 aufweist, die als Mittel zur lösbaren Anbindung des Beinpolsters 34 dienen. Die Führungsleisten 115 übergreifen einen steifen Rand 116 des Beinpolsters 34 und halten dieses an der Trägerplatte 31. Bevorzugt wird das Beinpolster 30 in Pfeilrichtung 97 (Fig. 12) parallel zur Beinplatte 30 zwischen den Führungsleisten 115 in die Beinplatte 30 eingeschoben. Die Innenseite der Beinplatte 30 und die Führungsleisten 115 bilden eine Aufnahmetasche für das Beinpolster 34. Das Beinpolster34 ist so auswechselbar und kann in besonders vorteilhafter Weise entsprechend den Wünschen und Anforderungen des Benutzers gestaltet werden.

Die Führungsleisten 115 sind einteilig mit der Beinplatte 30 ausgebildet. Die Führungsleisten 115 besitzen einen L-förmigen Querschnitt, mit dem sie sich aus der Ebene der Beinplatte 30 erheben und das Beinpolster 34 hintergreifen. Deckungsgleich zu den Führungsleisten 115 besitzt die Trägerplatte 34 der Beinplatte 30 Öffnungen.

Vorteilhaft sind mehrere Führungsleisten 115 vorgesehen, wobei sich die Führungsleisten 115 entlang des Umfangsrandes der Trägerplatte 34 der Beinplatte 30 erstrecken. Die Führungsleisten 115 sind vorteilhaft in Umfangsrichtung voneinander beabstandet. Es kann vorgesehen sein, dass die Führungsleisten 115 einen unterschiedlichen Abstand zum Umfangsrand der Beinplatte 30 besitzen. Ebenso kann die Länge der Führungsleisten 115 oder das Verhältnis zwischen Länge und Abstand benachbarter Führungsleisten 115 angepasst werden.

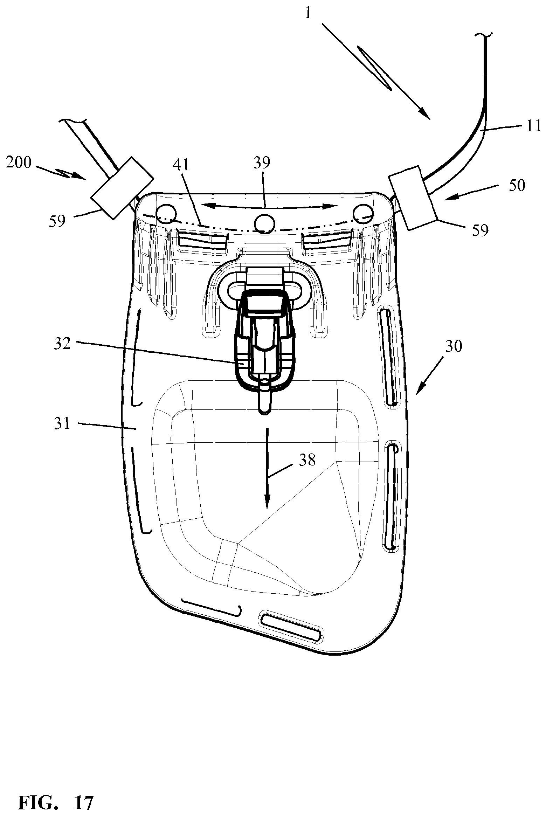

Die Beinplatte 30 ist an dem Traggurt 11 gehalten, der im Ausführungsbeispiel nach Fig. 17 mit seinen Enden an einem einfachen Schultergurt verbunden sein kann. Der Schultergurt kann quer über die Schulter eines Benutzers 99 gelegt sein. Die Beinplatte 30 kann - bei gelöster Fixiervorrichtung 50 - in Richtung des Doppelpfeils 39 auf dem Traggurt 11 verschoben werden.

Wie Fig. 17 zeigt, ist die Fixiervorrichtung 50 auf dem Traggurt 11 gehalten und umfasst ein Fixierelement 59, welches unmittelbar auf dem Traggurt 11 festzulegen ist.

Im Ausführungsbeispiel nach Fig. 17 sind die Fixierelemente 59 außerhalb des Gurtkanals 40 jeweils an dem ersten Ende bzw. an dem zweiten Ende des Gurtkanals 40 angeordnet. In der einen Richtung des Doppelpfeils 39 wird somit das eine Ende des Gurtkanals 40 an das Fixierelement 59 anstoßen; in der anderen Richtung des Doppelpfeils 39 wird das andere Ende des Gurtkanals 40 an das Fixierelement 59 anstoßen, so dass die Längsverschieblichkeit der Beinplatte 30 auf dem Traggurt 11 blockiert ist. Die Fixiervorrichtung 50 ist in ihrer Sperrstellung 200.

Das auf dem Traggurt 11 gehaltene Fixierelement 59 kann eine Klammer, eine Bremse oder dgl. sein. Zweckmäßig kann das Fixierelement 59 in der Sperrstellung 200 auch formschlüssig in den Traggurt 11 eingreifen, z. B. den Traggurt 11 durchdringen.

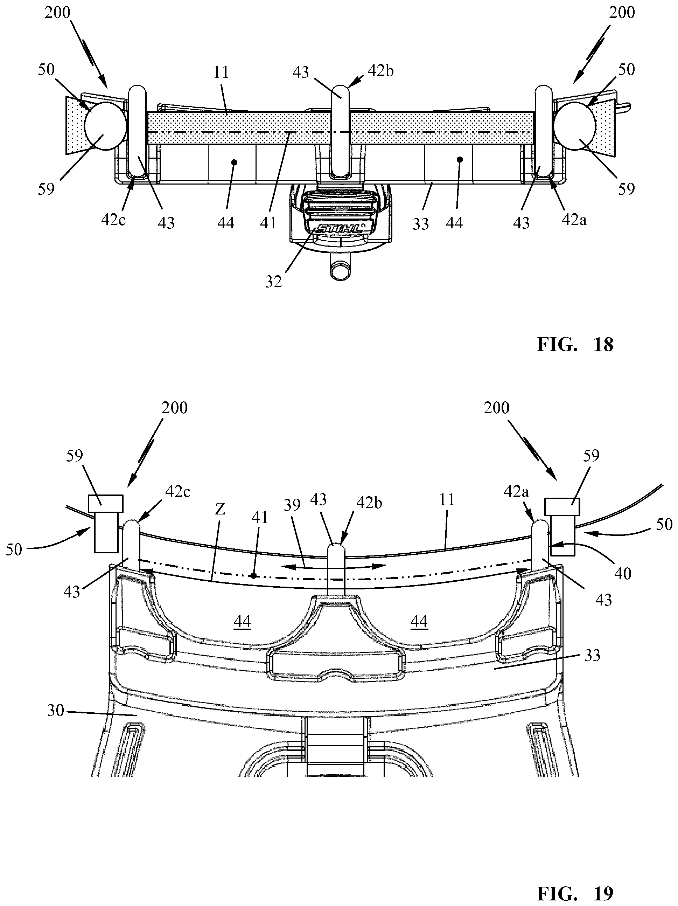

Eine dem Ausführungsbeispiel gemäß Fig. 17 entsprechende Fixiervorrichtung 50 mit auf dem Traggurt 11 gehaltenen Fixierelementen 59 ist in den Figuren 18 und 19 vergrößert dargestellt. Der Gurtkanal 40 ist durch Gurtösen 43 gebildet. Die Fixierelemente 59 können federbelastete Klemmen, Fixiernägel oder dgl. sein. Wie Fig. 19 zeigt, liegt das eine Fixierelement 59 in der Sperrstellung 200 der Fixiervorrichtung 50 vor dem einen Kanalabschnitt 42a des Gurtkanals 40 und das andere Fixierelement 59 vor dem letzten Kanalabschnitt 42c des Gurtkanals 40. Die Länge Z des Gurtkanals 40 erstreckt sich zwischen dem ersten Kanalabschnitt 42a und dem letzten Kanalabschnitt 42c; die Fixierelemente 59 liegen mit einem Abstand zueinander, der der Länge Z des Gurtkanals 40 entspricht. Der Gurtkanal 40 ist somit zwischen den Fixierelementen 59 festgelegt und in diesem Sinne in Richtung des Doppelpfeils 39 unverschiebbar. Geringe Verschiebewege können zugelassen sein.

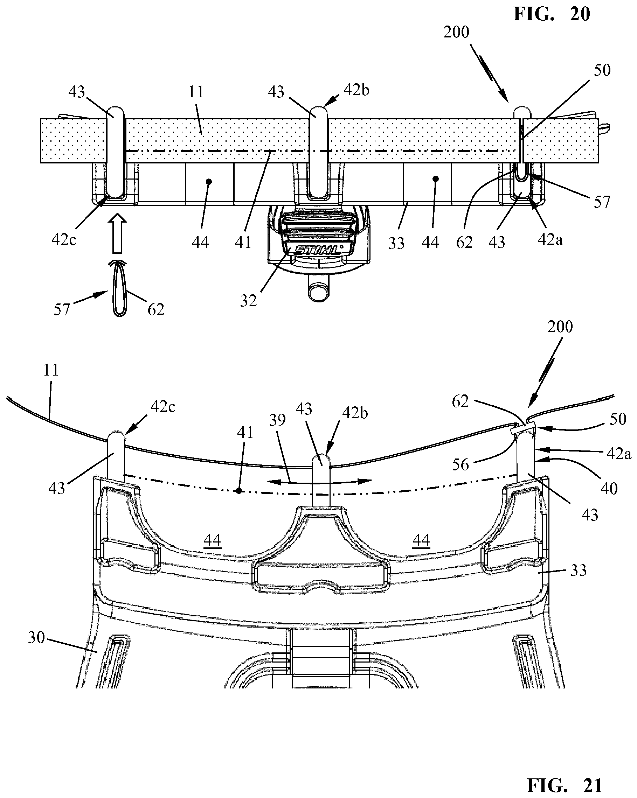

In dem Ausführungsbeispiel der Figuren 20 und 21 ist ein Ausführungsbeispiel einer Fixiervorrichtung 50 gezeigt, bei der das Fixierelement 57 durch eine Klammer 62 gebildet ist. Wie auf der rechten Seite in Fig. 20 gezeigt, wird das als Klammer 62 ausgebildete Fixierelement 57 oberhalb einer Gurtöse 43 derart angeordnet, dass der Traggurt 11 aus dem Gurtkanal 40 angehoben wird. Das als Klammer 62 ausgebildete Fixierelement 57 liegt oberhalb der Gurtöse 43, wodurch der Traggurt 11 einen erhöhten Umschlingungswinkel 56 um die Gurtöse 43 einnimmt. Dieser erhöhte Umschlingungswinkel 56 zusammen mit der scharfen Umlenkung des Traggurtes 11 im Bereich der Klammer 62 verhindert, dass die im Umschlingungswinkel 56 gefangene Gurtöse 43 in Richtung des Doppelpfeils 39 bewegt werden kann. Bis auf ein ggf. geringes Spiel ist die Beinplatte 30 in Richtung des Doppelpfeils 39 unverschiebbar auf dem Traggurt 11 gehalten.

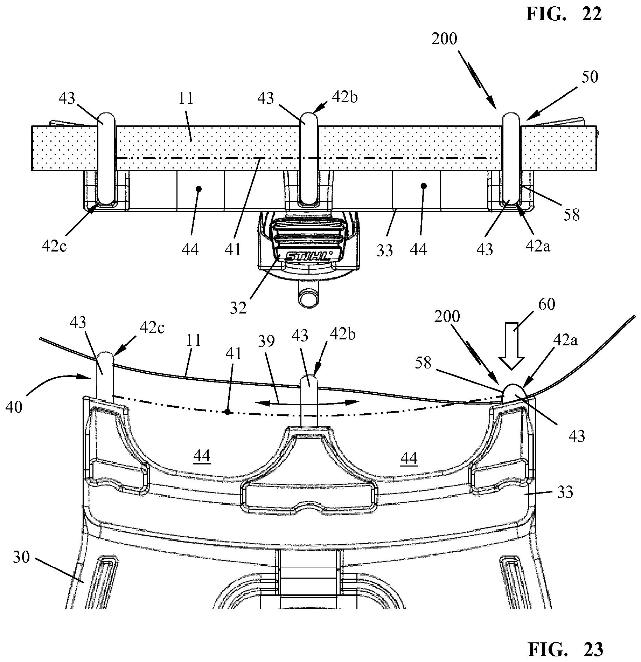

Im Ausführungsbeispiel nach den Figuren 22 und 23 ist die Fixiervorrichtung 50 an der Beinplatte 30 gehalten. Als Fixiervorrichtung 50 ist einer der Kanalabschnitte 42a, 42b, 42c des offenen Gurtkanals 40 ausgebildet, im Ausführungsbeispiel der Kanalabschnitt 42a des offenen Gurtkanals 40. Wie Fig. 23 zeigt, bildet die Gurtöse 43 des Kanalabschnitts 42a das Fixierelement 58 der Fixiervorrichtung 50. Die Gurtöse 43 wird als bewegliches Fixierelement 58 in Pfeilrichtung 60 in den Gurtkanalquerschnitt verlagert. Die Fixierung erfolgt durch Verengung des Gurtkanals. Das Fixierelement 58 der Fixiervorrichtung 50 ist somit durch den Kanalabschnitt 42a bzw. die Gurtöse 43 gebildet, die relativ zur Kanalmittelachse 41 zu verlagern ist. Der Traggurt 11 wird somit zwischen der Gurtöse 43 und dem Boden des Gurtkanals 40 geklemmt gehalten, was einer Sperrstellung 200 der Fixiervorrichtung 50 entspricht. In der Sperrstellung 200 der Fixiervorrichtung 50 sind die zum Verschieben der Beinplatte 30 auf dem Traggurt 11 notwendigen Verschiebekräfte signifikant höher, insbesondere um Faktoren höher als die zum Verschieben notwendige Kraft in Freigabestellung 100 der Fixiervorrichtung 50. Bei einem aus Kanalabschnitten 42a, 42b, 42c zusammengesetzten Gurtkanal 40 wird die Fixiervorrichtung 50 vorteilhaft als relativ zur Kanalmittelachse 41 zu verlagernder Kanalabschnitt 42a ausgebildet.

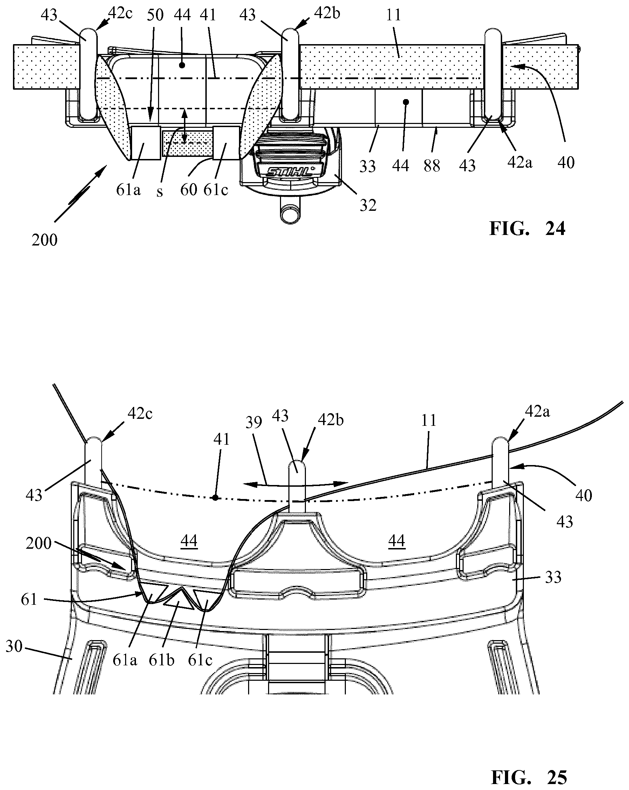

Im Ausführungsbeispiel nach den Figuren 24 und 25 ist die Fixiervorrichtung 50 als an der Beinplatte 30 gehaltene Klampe 61 ausgebildet. Die Klampe 61 liegt auf der die Anschlusseinheit 32 tragenden Außenseite 88 der Trägerplatte 31. Die Klampe 61 liegt quer zur Kanalmittelachse 41 mit seitlichem Abstand s zum Gurtkanal 40. Wie Fig. 25 zeigt, besteht die Klampe 61 aus drei Klemmpfosten 61a, 61b, 61c, zwischen denen der Traggurt 11 einzufädeln ist. Der so aus dem Gurtkanal 40 über die Klampe 61 umgeleitete Traggurt 11 ist - insbesondere durch die mehrfache Umlenkung zwischen den Klemmpfosten 61a, 61b und 61c - reibschlüssig gehalten und fixiert die Beinplatte 30 unverschiebbar auf dem Traggurt 11.

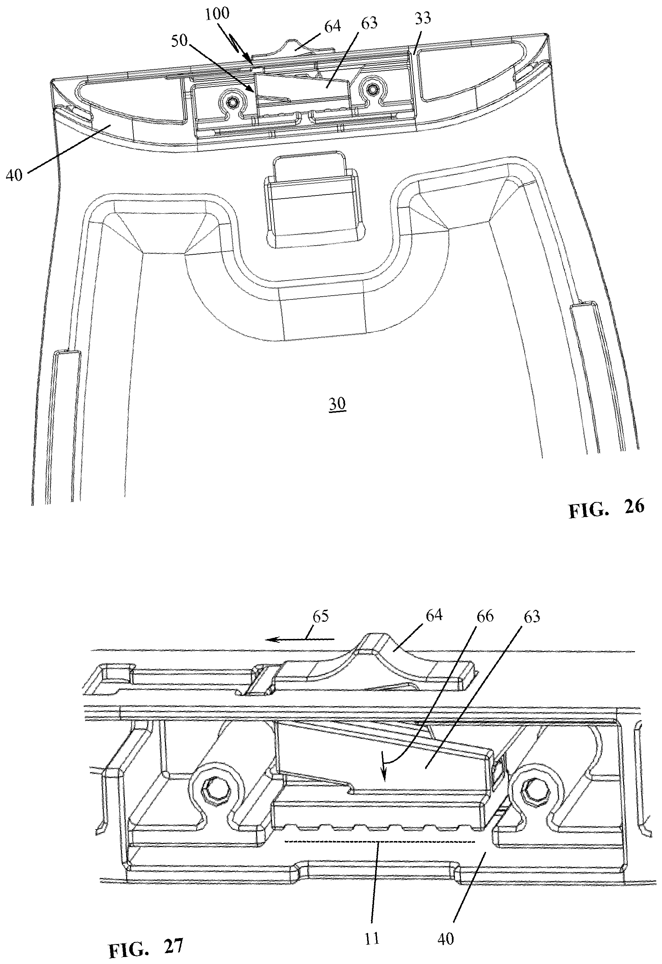

Im Ausführungsbeispiel nach den Figuren 26 und 27 ist das Fixierelement 63 der Fixiervorrichtung 50 als Klemmschieber (Fig. 27) ausgebildet. In der dargestellten Freigabestellung 100 ist ein durch den über seine Länge geschlossenen Gurtkanal 40 geführter Traggurt 11 frei verschiebbar; die Beinplatte 30 ist auf dem Traggurt 11 verschiebbar.

Wird der im Rand 33 der Beinplatte 30 gelagerte Schieber 64 in Pfeilrichtung 65 verschoben, wird das als Klemmbock ausgebildete Fixierelement 63 in Pfeilrichtung 66 in den über seine Länge geschlossenen Gurtkanal 40 verlagert und klemmt einen im Gurtkanal 40 laufenden Traggurt 11, der in Fig. 27 strichliert angedeutet ist. Die Fixiervorrichtung 50 ist in ihrer Klemmstellung 200.

In Fig. 28 ist gezeigt, wie das untere Ende 26 der Rückenplatte 2 aus der geschlossenen textilen Aufnahmetasche 29 des Hüftgurtes 27 gemäß Ansicht in Fig. 6 entnommen werden kann. Zunächst ist die Lasche 72 zu lösen, die einen Endflansch 71 des Endes 26 übergreift. Danach kann das untere Ende 26 der Rückenplatte 2 in Pfeilrichtung 98 aus der textilen Aufnahmetasche 29 herausgeschwenkt werden. Die Anbindung der Gurte der Tragvorrichtung 1 an die Rückenplatte 2 über textile Aufnahmetaschen 13, 29 ist als Weiterbildung der vorstehend beschriebenen Erfindungen zu verstehen.

Diese Form der Verbindung zwischen einer Rückenplatte 2 und einem Hüftgurt 27 ist vorteilhaft bei einem Tragsystem für einen auf dem Rücken getragenen Akku AP (Rückenakku) anwendbar und zu nutzen. So kann zweckmäßig auf der Grundplatte 12 der Rückenplatte 2 ein Akku AP angeordnet sein. Der Akku AP kann in Form eines Akkupacks ausgebildet sein. Der Akku AP oder der Akkupack bildet die Last, die von der erfindungsgemäßen Tragvorrichtung 1 getragen wird, wobei sich die Last (Rückenplatte mit Akkupack) mittels der textilen Aufnahmetasche 29 z. B. an einem Hüftgurt 27 abstützt. Der Akku AP bzw. der Akkupack dient insbesondere dem Betrieb eines elektrischen Arbeitsgerätes.

In einer weiteren Ausgestaltung der Tragvorrichtung 1 kann an der Rückenplatte 2 bzw. deren Grundplatte 12 eine Einhängung für ein Arbeitsgerät vorgesehen sein, z. B. eines durch den Akku AP betriebenen elektrischen Arbeitsgerätes. Es kann auch vorteilhaft sein, das Arbeitsgerät am Hüftgurt 27 selbst zu tragen. Das Arbeitsgerät kann durch den Benutzer auch ausschließlich in der Hand gehalten werden.

Die Befestigung eines auf einer Grundplatte 12 einer Tragvorrichtung 1 befestigten Akkus AP mittels einer textilen Aufnahmetasche 29 an einem Hüftgurt 27 bildet einen eigenständigen erfinderischen Grundgedanken, unabhängig davon, ob ein Arbeitsgerät mit der Tragvorrichtung 1 und/oder der Rückenplatte 2 verbunden ist.

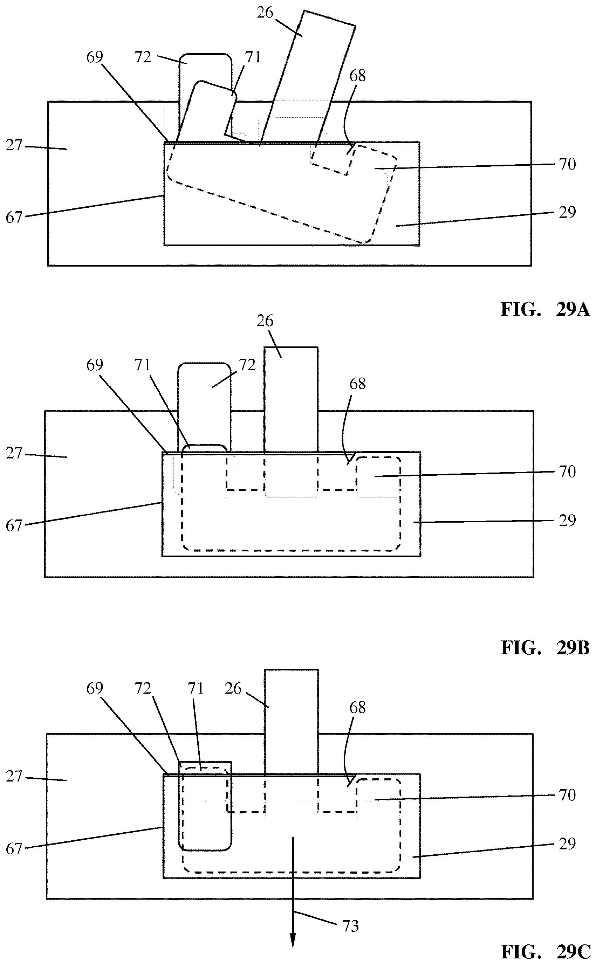

In den Figuren 29A bis 29C ist dieser weitere, eigenständige Erfindungsgedanke schematisch wiedergegeben, die in einer Ausführungsform als lösbare Verbindung zwischen dem unteren Ende 26 der Rückenplatte 2 und der textilen Aufnahmetasche 29 des Hüftgurtes 27 ausgebildet ist. Allgemein betrifft diese Erfindung die Verbindung von formstabilen Elementen mit textilen Elementen eines Rückentragesystems. Im gezeigten Ausführungsbeispiel wird die Rückenplatte einer Tragvorrichtung 1 über verschließbare textile Aufnahmetaschen 13, 29 mit Gurten der Tragvorrichtung 1 verbunden.

Beispielhaft hat die textile Aufnahmetasche 29 eine Öffnung 69, die von einem äußeren Rand 67 der Aufnahmetasche 29 bis zu einem Abnäher 68 verläuft. Das Ende 26 der Rückenplatte 2 hat eine im Wesentlichen T-förmige Gestalt mit Endflanschen 70, 71. Zum Verbinden des unteren Endes 26 der Rückenplatte 2 mit dem Hüftgurt 27 wird der in seiner Erstreckung niedrigere Endflansch 70 in die Aufnahmetasche 29 eingefädelt und greift hinter den Abnäher 68. Nunmehr wird - wie Fig. 29B zeigt - das gesamte T-förmige Ende 26 der Rückenplatte 2 in die Aufnahmetasche 29 geschoben, wobei der längere Endflansch 71 geringfügig über die Öffnung 69 der Aufnahmetasche 29 vorsteht. Zur Fixierung der Montagestellung gemäß Fig. 29B wird eine am Hüftgurt 27 befestigte Lasche 72 über das herausragende Ende des Endflansches 71 gestülpt und mit der Außenseite der Aufnahmetasche 29 z. B. mittels Klettverschluss fest verbunden. Beim Schließen der Aufnahmetasche 29 wird das überstehende Ende des Endflansches 71 in die Aufnahmetasche 29 gedrückt und damit das Längsspiel der Verbindung minimiert. Anstelle der asymmetrischen Ausbildung der Endflansche kann auch die Aufnahmetasche 29 asymmetrisch gestaltet sein. Der Hüftgurt 27 ist fest mit der Rückenplatte 2 verbunden, wobei die abzutragende Last in Pfeilrichtung 73 das Ende 26 der Rückenplatte 2 in die Aufnahmetasche 29 drückt. Eine lastübertragende Verbindung ist gewährleistet.

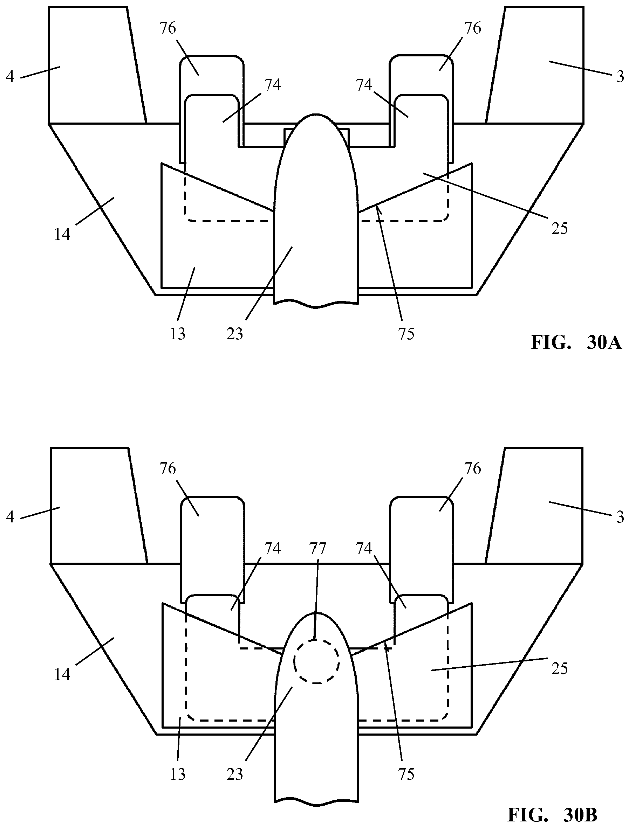

Das obere Ende 23 der Rückenplatte 2, im Ausführungsbeispiel das obere Ende 23 des Auszugs 22, trägt eine Montageplatte 25, die in der Ansicht gemäß Fig. 30A im Wesentlichen U-förmig ausgebildet ist. Die Aufnahmetasche 13 der Schultergurteinheit 14 ist der Montageplatte 25 entsprechend ausgebildet, wobei die Montageplatte 25 - wie Fig. 30B zeigt - in die Aufnahmetasche 13 der Schultergurteinheit 14 eingeschoben wird. Die Schenkelenden 74 der U-förmigen Montageplatte 25 ragen aus der Öffnung 75 der Aufnahmetasche 13 heraus und werden durch flexible Laschen 76 fixiert, die an der Schultergurteinheit 14 befestigt sind. Die flexiblen Laschen 76 werden über die Schenkelenden 74 geklappt und an der Außenseite der Aufnahmetasche 13 festgelegt.

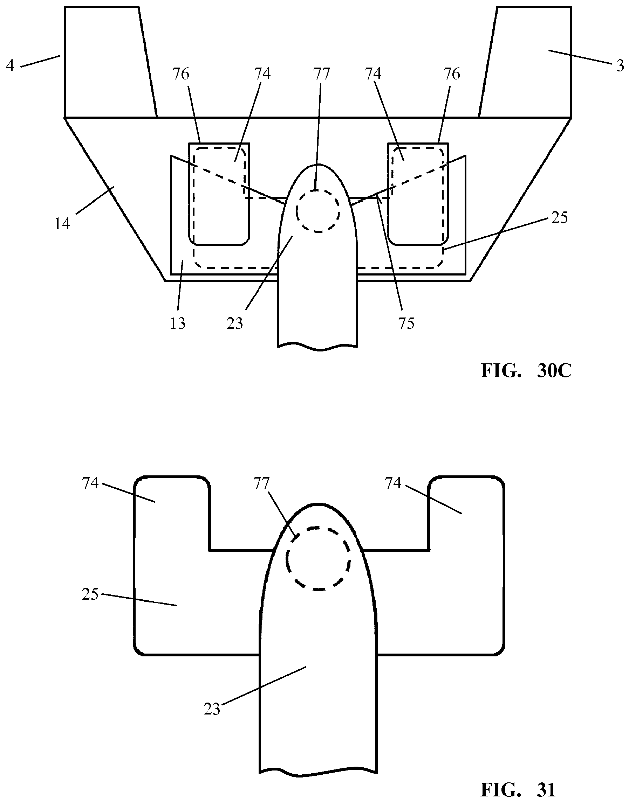

Dies kann durch einen Klettverschluss oder dgl. insbesondere lösbaren Verschluss erfolgen, wie in Fig. 30C dargestellt ist. Zweckmäßig umschlingt die Lasche 76 das Schenkelende 74, so dass durch das Umklappen und Festlegen der Lasche 76 die Montageplatte 25 in die Aufnahmetasche 13 gepresst und damit das Längsspiel dieser Verbindung minimiert wird.

Zur Reinigung oder zum Austausch der textilen Bestandteile der Tragvorrichtung 1 können die Aufnahmetaschen 13,29 geöffnet und die starren Bestandteile entnommen werden. Auf diese Weise können die Polster separat von den harten Komponenten der Tragvorrichtung 1 beispielsweise in der Waschmaschine gereinigt werden.

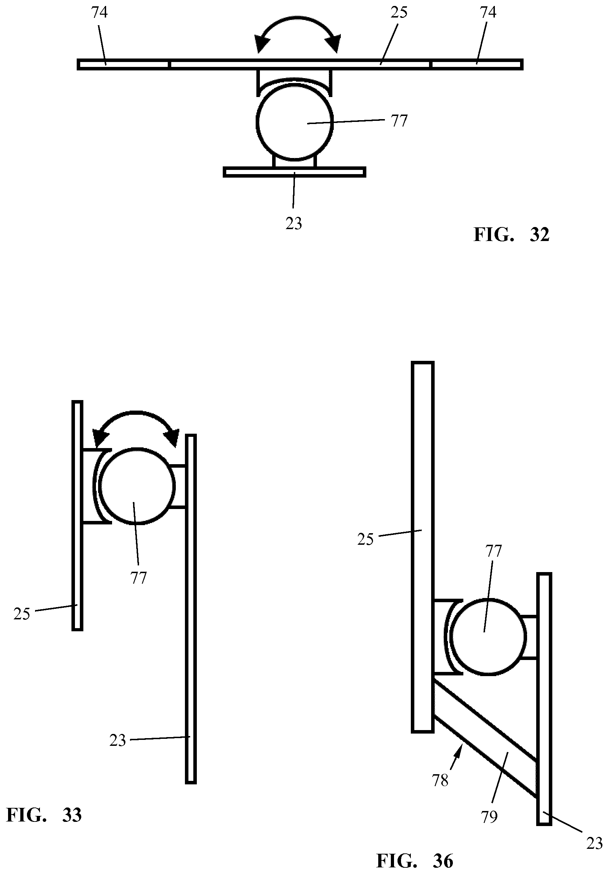

Das obere Ende 23 der Rückenplatte 2, nämlich das Ende 23 des Auszugs 22, ist in Fig. 31 wiedergegeben. Die Montageplatte 25 ist über ein Kugelgelenk 77 angebunden. Wie die schematischen Darstellungen der Figuren 32 und 33 zeigen, ist die Montageplatte 25 in allen Raumrichtungen schwenkbar. Die Rückenplatte 2 ist somit gelenkig mit der Schultergurteinheit 14 verbunden. Der Benutzer 99 kann sich ohne Behinderung durch die Tragvorrichtung 1 bewegen.

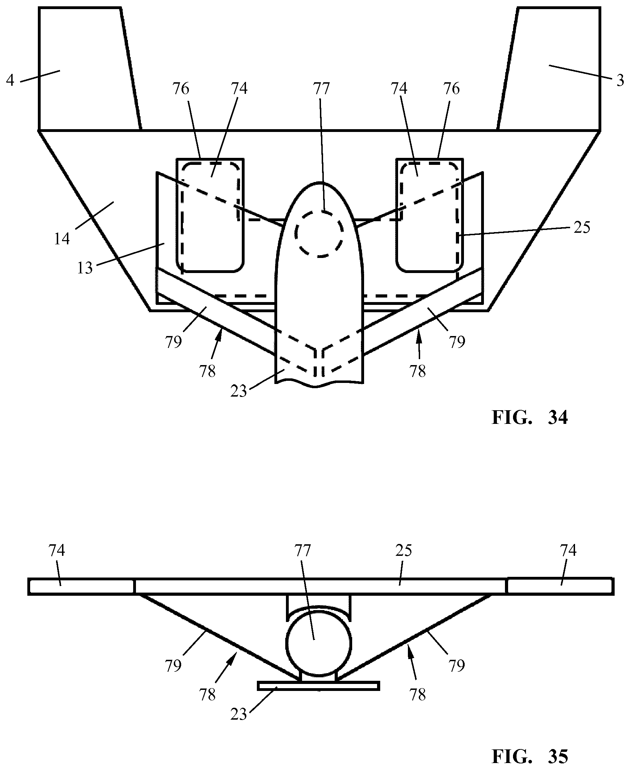

Um die Schultergurteinheit 14 relativ zur Rückenplatte 2 in einer definierten Ausgangslage zu halten, sind Federmittel 78 vorgesehen, die beidseitig des Kugelgelenks 77 an der Schultergurteinheit 14 angreifen und mit der Rückenplatte 2 verbunden sind. Im gezeigten Ausführungsbeispiel nach den Figuren 34 bis 36 wirken die Federmittel 78 zwischen dem Ende 23 des Auszugs 22 der Rückenplatte 2 und der Schultergurteinheit 14.

Die Federmittel 78 sind bevorzugt elastische Bänder 79 oder dgl., die, wie die Figuren 35 und 36 zeigen, von einem Punkt unterhalb des Kugelgelenks 77 aufwärts zur Schultergurteinheit 14 verlaufen. Wie Fig. 35 zeigt, liegen die Federmittel 78 derart, dass sie symmetrisch rechts und links des Kugelgelenks 77 liegen, um im unbelasteten Zustand eine neutrale, insbesondere symmetrische Ausrichtung der Schultergurteinheit 14 gegenüber der Rückenplatte 2 zu gewährleisten.

Die beschriebene Fixiervorrichtung 50, durch welche die Beinplatte 30 auf dem Traggurt 11 festzulegen ist, wird entsprechend dem Arbeitseinsatz oder dem Wunsch des Benutzers genutzt. In den Figuren 37 bis 40 ist ein Benutzer 99 gezeigt, der ein als Freischneider ausgebildetes Arbeitsgerät 10 mit der erfindungsgemäßen Tragvorrichtung 1 trägt. Der Führungsschaft 101 des Arbeitsgerätes 10 ist mittels der Anschlusseinheit 32 an der Beinplatte 30 gehalten. Die Anschlusseinheit 32 liegt mit einem Abstand x unterhalb des oberen Randes 33 der Beinplatte 30. Der Führungsschaft 101 trägt an einem - unteren - Ende einen Werkzeugkopf 102 mit einem Werkzeug 103; an dem anderen Ende des Führungsschaftes 101 ist eine Antriebseinheit 104 angeordnet, die ein Antriebsmotor sein kann oder aber ein Akkupack für einen im Werkzeugkopf 102 angeordneten Elektromotor.

Der Benutzer 99 trägt das Arbeitsgerät 10 an einer Tragvorrichtung 1. Mittels eines im Ausführungsbeispiel dargestellten Lenkergriffs 105 wird das Arbeitsgerät 10 geführt. Im ersten Arbeitsmodus I wird - wie die Draufsicht in Fig. 38 zeigt - der Werkzeugkopf 102 mit dem Werkzeug 103 im Wesentlichen in einer Schwenkbewegung parallel zum Boden geführt. Die Schwenkbewegung ist in Fig. 38 mit dem Doppelpfeil 90 angedeutet.

In diesem Arbeitseinsatz kann es von Vorteil sein, die Beinplatte 30 ortsfest auf dem Traggurt 11 zu fixieren; entsprechend wird die Fixiervorrichtung 50 in eine Sperrstellung 200 verstellt; die Beinplatte 30 ist unverschiebbar auf dem Traggurt 11 gehalten. Ein Verschleiß bedingt durch Relativbewegungen zwischen der Beinplatte 30 und dem Traggurt 11 ist ebenso reduziert. Die Beinplatte 30 behält ihre seitliche, initial vom Benutzer vorgegebene Lage bei. Ein selbstständiges, betriebsbedingtes Verschieben der Beinplatte 30 auf die Vorderseite des Benutzerbeins ist unterbunden. Nach Wunsch des Benutzers kann dieser aber auch mit einer verschiebbaren Beinplatte arbeiten.

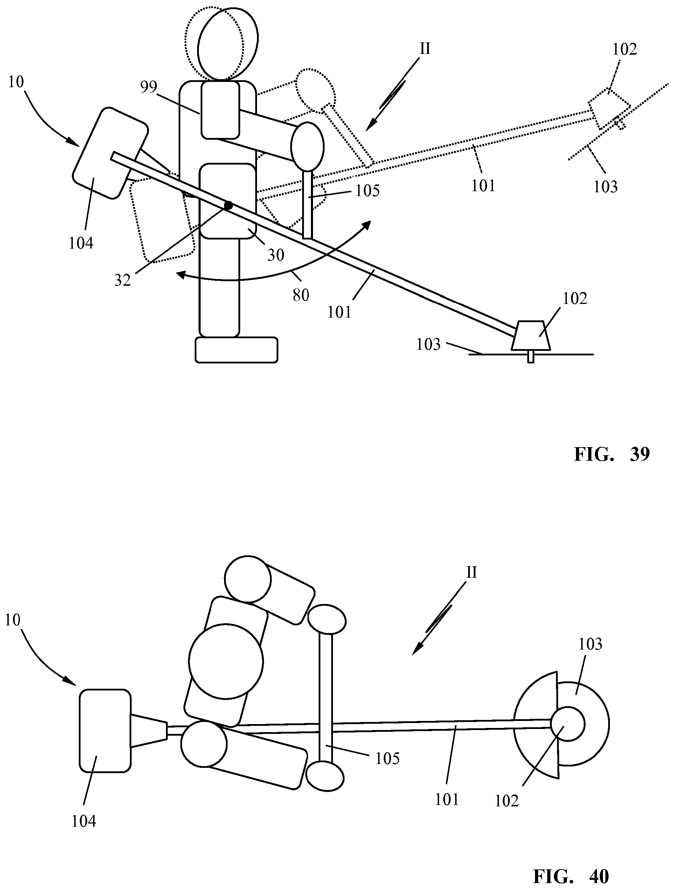

In einem Arbeitseinsatz wird das Arbeitsgerät 10 vertikal verschwenkt, wie der Doppelpfeil 80 in Fig. 39 andeutet. Bei dieser Auf- und Abbewegung kann es vorteilhaft sein, wenn sich die Beinplatte 30 verlagert, wodurch ein zweckmäßiges Arbeiten begünstigt ist. In diesem Arbeitseinsatz ist die Fixiervorrichtung 50 in die Freigabestellung 100 verstellt, so dass die Beinplatte 30 längs des Traggurtes 11 beweglich ist und die Vertikalbewegung entsprechend dem Doppelpfeil 80 ohne Behinderung durchgeführt werden kann. Die Beinplatte 30 verschiebt sich bei der Ausführung der Bewegungen auf dem Traggurt 11.

## Patentansprüche

1. Tragvorrichtung zum Tragen eines handgeführten Arbeitsgerätes (10) durch einen Benutzer (99), mit mindestens einem Schultergurt (3, 4) zur Anlage der Tragvorrichtung (1) auf der Schulter eines Benutzers (99), und mit einer seitlichen Beinplatte (30) mit einer Anschlusseinheit (32) zum Ankoppeln des Arbeitsgerätes (10), wobei die Beinplatte (30) mit einem Traggurt (11) an der Tragvorrichtung (1) gehalten ist, und der Traggurt (11) mit einem Ende (15) mit dem Schultergurt (3, 4) wirkverbunden ist, und wobei der Traggurt (11) zwischen der Beinplatte (30) und dem Schultergurt (3, 4) über ein Koppelschloss (84) mit einem Seitengurt (20) verbunden ist,
**dadurch gekennzeichnet, dass** das Koppelschloss (84) auf dem Traggurt (11) längsverschiebbar geführt ist, und dass das Koppelschloss (84) einen Sperrzustand und einen Freigabezustand besitzt¹, und dass das Koppelschloss (84) zumindest eine Klemme (87) aufweist, über die das Koppelschloss (84) längs dem Traggurt (11) festlegbar ist².

2. Tragvorrichtung nach Anspruch 1,
**dadurch gekennzeichnet, dass** das Koppelschloss (84) zwei Klemmen (87) mit je einem Betätigungsflügel (92, 94) aufweist, und die beiden Betätigungsflügel (92, 94) zum freien Verschieben des Koppelschlosses (84) auf dem Traggurt (11) gemeinsam zu betätigen sind.

3. Tragvorrichtung nach Anspruch 2,
**dadurch gekennzeichnet, dass** die Betätigungsflügel (92, 94) durch zwei Finger eines Benutzers gemeinsam zu betätigen sind.

4. Tragvorrichtung nach einem der Ansprüche 1 bis 3,
**dadurch gekennzeichnet, dass** die Beinplatte (30) ein auswechselbares Beinpolster (34) trägt.

5. Tragvorrichtung nach Anspruch 4,
**dadurch gekennzeichnet, dass** die Beinplatte (30) eine Trägerplatte (31) umfasst, und dass ein steifer Rand (116) des Beinpolsters (34) von Führungsleisten (115) der Trägerplatte (31) übergriffen ist.

6. Tragvorrichtung nach einem der Ansprüche 1 bis 5,
**dadurch gekennzeichnet, dass** die Tragvorrichtung eine Rückenplatte (2) zum Befestigen einer Last und einen Hüftgurt (27) umfasst, und dass die Rückenplatte (2) über eine zumindest teilweise verschließbare, textile Aufnahmetasche (13, 29) mit dem Hüftgurt (27) und/oder dem Schultergurt (3) verbunden ist.

7. Tragvorrichtung nach Anspruch 6,
**dadurch gekennzeichnet, dass** die textile Aufnahmetasche (13, 29) am Hüftgurt (27) und/oder am Schultergurt (3) ausgebildet ist, und ein Abschnitt der Rückenplatte (2) auswechselbar in der Aufnahmetasche (13, 29) gehalten ist.

8. Tragvorrichtung nach Anspruch 7,
**dadurch gekennzeichnet, dass** der Abschnitt der Rückenplatte (2) mittels einer Lasche (72, 76) in der textilen Aufnahmetasche (13, 29) gesichert ist.

9. Tragvorrichtung nach einem der Ansprüche 1 bis 8,
**dadurch gekennzeichnet, dass** funktional zwischen dem Traggurt (11) und der Beinplatte (30) eine Fixiervorrichtung (50) angeordnet ist, dass die Fixiervorrichtung (50) eine Freigabestellung (100) und eine Sperrstellung (200) aufweist, wobei in der Freigabestellung (100) die Beinplatte (30) längs des Traggurtes (11) verschiebbar ist, und in der Sperrstellung (200) die Beinplatte (30) an dem Traggurt (11) unverschieblich festgelegt ist, derart, dass die Sperrstellung (200) einem ersten Arbeitsmodus (I) des Arbeitsgerätes (10) und die Freigabestellung (100) einem zweiten Arbeitsmodus (II) des Arbeitsgerätes (10) zugeordnet ist.

10. Tragvorrichtung nach Anspruch 9,
**dadurch gekennzeichnet, dass** die Beinplatte (30) einen Gurtkanal (40) für den Traggurt (11) aufweist, und der Traggurt (11) in Richtung der Kanalmittelachse (41) durch den Gurtkanal (40) verläuft.

11. Tragvorrichtung nach Anspruch 12,
**dadurch gekennzeichnet, dass** die Fixiervorrichtung (50) ein in Sperrstellung (200) in den freien Querschnitt des Gurtkanals (40) verlagertes Fixierelement (58) umfasst.

12. Tragvorrichtung nach Anspruch 9,
**dadurch gekennzeichnet, dass** die Fixiervorrichtung (50) an der Beinplatte (30) gehalten ist.

13. Tragvorrichtung nach Anspruch 9,
**dadurch gekennzeichnet, dass** die Fixiervorrichtung (50) ein auf dem Traggurt (11) gehaltenes Fixierelement (57, 59) umfasst.

14. Tragvorrichtung nach Anspruch 9,
**dadurch gekennzeichnet, dass** ein an der Anschlusseinheit (32) gehaltenes Arbeitsgerät (10) einen Führungsschaft (101) mit einem an einem Ende angeordneten Werkzeug (103) aufweist und der Gurtkanal (40) der Beinplatte (30) mit Abstand (x) zum Führungsschaft (101) liegt.

## Claims

1. Carrying device which allows a hand-held implement (10) to be carried by a user (99), having at least one shoulder strap (3, 4) for resting the carrying device (1) against the shoulder of the user (99), and having a lateral leg panel (30) with a connection unit (32) for coupling the implement (10), wherein the leg panel (30) is retained on the carrying device (1) by a carrying strap (11), and the carrying strap (11) has one end (15) operatively connected to the shoulder strap (3, 4), and wherein the carrying strap (11) is connected to a side strap (20) between the leg panel (30) and the shoulder strap (3, 4) via a buckle (84),
**characterized in that** the buckle (84) is guided in a longitudinally displaceable manner on the carrying strap (11), and **in that** the buckle has a blocking state and a release state, and **in that** the buckle (84) has at least one clamp (87), via which the buckle can be secured along the carrying strap (11).

2. Carrying device according to claim 1,
**characterized in that** the buckle (84) has two clamps (87) each with an actuating wing (92, 94), and the two actuating wings (92, 94) are to be actuated together in order for the buckle (84) to be displaced freely on the carrying strap (11).

3. Carrying device according to claim 2,
**characterized in that** the actuating wings (92, 94) are to be actuated together by a user's two fingers.

4. Carrying device according to one of claims 1 to 3,
**characterized in that** the leg panel (30) bears an interchangeable leg pad (34).

5. Carrying device according to claim 4,
**characterized in that** the leg panel (30) comprises a carrier panel (31), and **in that** guide strips (115) of the carrier panel (31) grip over a stiff rim (116) of the leg pad (34).

6. Carrying device according to one of claims 1 to 5,
**characterized in that** the carrying device comprises a back panel (2) for fastening a load and also comprises a hip strap (27), and **in that** the back panel (2) is connected to the hip strap (27) and/or the shoulder strap (3) via an at least partially closable, textile receiving pocket (13, 29).

7. Carrying device according to claim 6,
**characterized in that** the textile receiving pocket (13, 29) is formed on the hip strap (27) and/or on the shoulder strap (3), and a portion of the back panel (2) is retained in an interchangeable manner in the receiving pocket (13, 29).

8. Carrying device according to claim 7,
**characterized in that** the portion of the back panel (2) is secured in the textile receiving pocket (13, 29) by means of a flap (72, 76).

9. Carrying device according to one of claims 1 to 8,
**characterized in that** a fixing device (50) is arranged functionally between the carrying strap (11) and the leg panel (30), and **in that** the fixing device (50) has a release position (100) and a blocking position (200), wherein, in the release position (100), the leg panel (30) can be displaced along the carrying strap (11) and, in the blocking position (200), the leg panel (30) is secured in a non-displaceable manner on the carrying strap (11) such that the blocking position (200) is assigned to a first operating mode (I) of the implement (10) and the release position (100) is assigned to a second operating mode (II) of the implement (10).

10. Carrying device according to claim 9,
**characterized in that** the leg panel (30) has a strap channel (40) for the carrying strap (11), and the carrying strap (11) runs through the strap channel (40) in the direction of the channel center axis (41).

11. Carrying device according to claim 9,
**characterized in that** the fixing device (50) comprises a fixing element (58) which, in the blocking position (200), is shifted into the free cross section of the strap channel (40).

12. Carrying device according to claim 9,
**characterized in that** the fixing device (50) is retained on the leg panel (30).

13. Carrying device according to claim 9,
**characterized in that** the fixing device (50) comprises a fixing element (57, 59) which is retained on the carrying strap (11).

14. Carrying device according to claim 9,
**characterized in that** an implement (10) retained on the connection unit (32) has a guide shank (101) with a tool (103) arranged at one end, and the strap channel (40) of the leg panel (30) is located at a distance (x) from the guide shank (101).

## Revendications

1. Dispositif de portage pour le portage d'un appareil de travail à main (10) par un utilisateur (99), muni d'au moins une courroie d'épaule (3, 4) pour l'appui du dispositif de portage (1) sur l'épaule d'un utilisateur (99), et muni d'une plaque de jambe latérale (30) munie d'une unité de raccordement (32) pour le couplage de l'appareil de travail (10), la plaque de jambe (30) étant maintenue avec une courroie de portage (11) sur le dispositif de portage (1), et la courroie de portage (11) étant en liaison active avec une extrémité (15) avec la courroie d'épaule (3, 4), et la courroie de portage (11) étant reliée entre la plaque de jambe (30) et la courroie d'épaule (3, 4) par l'intermédiaire d'une boucle de ceinture (84) avec une courroie latérale (20),
**caractérisé en ce que** la boucle de ceinture (84) est guidée en coulissement longitudinal sur la courroie de portage (11), et que la boucle de ceinture (84) possède un état de blocage et un état de libération, et que la boucle de ceinture (84) comprend au moins une pince (87), par l'intermédiaire de laquelle la boucle de ceinture (84) peut être immobilisée le long de la courroie de portage (11).

2. Dispositif de portage selon la revendication 1,
**caractérisé en ce que** la boucle de ceinture (84) comprend deux pinces (87), chacune munies d'un volet d'actionnement (92, 94), et les deux volets d'actionnement (92, 94) doivent être actionnés ensemble pour le coulissement libre de la boucle de ceinture (84) sur la courroie de portage (11).

3. Dispositif de portage selon la revendication 2,
**caractérisé en ce que** les volets d'actionnement (92, 94) doivent être actionnés ensemble par deux doigts d'un utilisateur.

4. Dispositif de portage selon l'une quelconque des revendications 1 à 3,
**caractérisé en ce que** la plaque de jambe (30) porte une garniture de jambe remplaçable (34).

5. Dispositif de portage selon la revendication 4,
**caractérisé en ce que** la plaque de jambe (30) comporte une plaque de support (31), et **en ce qu'**un bord rigide (116) de la garniture de jambe (34) est engagé en recouvrement par des barres de guidage (115) de la plaque de support (31).

6. Dispositif de portage selon l'une quelconque des revendications 1 à 5,
**caractérisé en ce que** le dispositif de portage comporte une plaque de dos (2) pour la fixation d'une charge et une courroie de hanche (27), et **en ce que** la plaque de dos (2) est reliée par l'intermédiaire d'une poche de réception textile (13, 29), pouvant au moins partiellement être fermée, avec la courroie de hanche (27) et/ou la courroie d'épaule (3).

7. Dispositif de portage selon la revendication 6,
**caractérisé en ce que** la poche de réception textile (13, 29) est formée sur la courroie de hanche (27) et/ou sur la courroie d'épaule (3), et une section de la plaque de dos (2) est maintenue de manière remplaçable dans la poche de réception (13, 29).

8. Dispositif de portage selon la revendication 7,
**caractérisé en ce que** la section de la plaque de dos (2) est sécurisée dans la poche de réception textile (13, 29) au moyen d'une languette (72, 76).

9. Dispositif de portage selon l'une quelconque des revendications 1 à 8,
**caractérisé en ce qu'**un dispositif de fixation (50) est agencé de manière fonctionnelle entre la courroie de portage (11) et la plaque de jambe (30), **en ce que** le dispositif de fixation (50) comprend une position de libération (100) et une position de blocage (200) ; dans la position de libération (100), la plaque de jambe (30) étant coulissante le long de la courroie de portage (11) et, dans la position de blocage (200), la plaque de jambe (30) étant immobilisée sans possibilité de coulissement sur la courroie de portage (11), de telle sorte que la position de blocage (200) soit associée à un premier mode de travail (1) de l'appareil de travail (10) et que la position de libération (100) soit associée à un deuxième mode de travail (II) de l'appareil de travail (10).

10. Dispositif de portage selon la revendication 9,
**caractérisé en ce que** la plaque de jambe (30) comprend un canal de courroie (40) pour la courroie de portage (11), et la courroie de portage (11) s'étend à travers le canal de courroie (40) en direction de l'axe médian de canal (41).

11. Dispositif de portage selon la revendication 9,
**caractérisé en ce que** le dispositif de fixation (50) comporte un élément de fixation (58) déplacé dans la position de blocage (200) dans la section transversale libre du canal de courroie (40).

12. Dispositif de portage selon la revendication 9,
**caractérisé en ce que** le dispositif de fixation (50) est maintenu sur la plaque de jambe (30).

13. Dispositif de portage selon la revendication 9,
**caractérisé en ce que** le dispositif de fixation (50) comporte un élément de fixation (57, 59) maintenu sur la courroie de portage (11).

14. Dispositif de portage selon la revendication 9,
**caractérisé en ce qu'**un appareil de travail (10) maintenu sur l'unité de raccordement (32) comprend une tige de guidage (101) munie d'un outil (103) agencé à une extrémité et le canal de courroie (40) de la plaque de jambe (30) se situe à un écart (x) de la tige de guidage (101).
